# EUROPEAN PATENT APPLICATION

(11) **EP 4 819 652 A1**
(43) Date of publication of application: **07.10.2026**
(21) Application number: 24902947.1
(22) Date of filing: 13.12.2024
(51) Int. Cl.: H04W 4/50

(54) **INFORMATION TRANSMISSION METHOD AND APPARATUS**

(30) Priority: 15.12.2023 CN 202311738444
(71) Applicant: Huawei Technologies Co., Ltd., Shenzhen, Guangdong 518129 (CN)
(72) Inventor: LI, Meng, Shenzhen, Guangdong 518129 (CN); YING, Jiangwei, Shenzhen, Guangdong 518129 (CN); YANG, Yanmei, Shenzhen, Guangdong 518129 (CN); LI, Yan, Shenzhen, Guangdong 518129 (CN)
(74) Representative: Goddar, Heinz J.
(86) International application number: PCT/CN2024/139081
(87) International publication number: WO 2025/124530

(57) **Abstract**

Provided are an information transmission method and an apparatus. In the information transmission method, an SF network element obtains first information, where the first information indicates a requirement for a sensing service requested to be established. The SF network element sends second information and third information to an access network device, where the second information and the third information are determined based on the first information, the second information indicates a QoS requirement for the sensing service, and the third information indicates a QoS requirement for transmitting sensing data corresponding to the sensing service. Therefore, according to the method, the QoS requirement for the sensing service and the QoS requirement for transmitting the sensing data are determined based on the requirement for the sensing service requested to be established, and the QoS requirement for the sensing service and the QoS requirement for transmitting the sensing data are sent to the access network device. This helps establish the sensing service and improve sensing performance.

## Description

This application claims priority to Chinese Patent Application No. 202311738444.0, filed with the China National Intellectual Property Administration on December 15, 2023 and entitled "INFORMATION TRANSMISSION METHOD AND APPARATUS", which is incorporated herein by reference in its entirety.

### TECHNICAL FIELD

This application relates to the field of communication technologies, and in particular, to an information transmission method and an apparatus.

### BACKGROUND

A sensing technology is processing signals resulting from reflection of sensing signals off objects, to sense the objects, environments, and the like. The sensing technology can be used in conjunction with a communication technology, resulting in integrated sensing and communication. In scenarios of integrated sensing and communication, devices with communication functions can send sensing signals, and then perform sensing based on the sensing signals. Application function (application function, AF) network elements can initiate requests to a network for establishing sensing services. How the network processes the sensing services is a technical problem that needs to be resolved.

### SUMMARY

Embodiments of this application provide an information transmission method and an apparatus, so that a sensing service can be established, helping improve sensing performance.

According to a first aspect, this application provides an information transmission method. The method may be applied to a sensing function (sensing function, SF) network element, or may be applied to a chip in an SF network element, or may be applied to a logical module or software that can implement all or some functions of an SF network element. The following uses the SF network element as an example for description. The method includes: The SF network element obtains first information, where the first information indicates a requirement for a sensing service requested to be established. The SF network element sends second information and third information to an access network device, where the second information and the third information are determined based on the first information, the second information indicates a quality of service (quality of service, QoS) requirement for the sensing service, and the third information indicates a QoS requirement for transmitting sensing data corresponding to the sensing service.

Therefore, according to the method, the QoS requirement for the sensing service and the QoS requirement for transmitting the sensing data are determined based on the requirement for the sensing service requested to be established, and the QoS requirement for the sensing service and the QoS requirement for transmitting the sensing data are sent to the access network device. This helps the access network device perform sensing and transmit the sensing data based on the QoS requirement for the sensing service and the QoS requirement for transmitting the sensing data, so that the access network device performing sensing and transmitting the sensing data can meet the requirement for the sensing service. In this way, according to the method, the sensing service can be established, helping improve sensing performance.

In an optional implementation, the method further includes: The SF network element sends the first information or fourth information to a session management function (session management function, SMF) network element, where the first information or the fourth information is for determining the third information. The fourth information is determined based on the first information, the fourth information indicates a QoS requirement corresponding to a first tunnel, and the first tunnel is configured for the access network device to send the sensing data to the SF network element through a user plane function (user plane function, UPF) network element. The SF network element receives the third information from the SMF network element, where the third information specifically indicates a QoS requirement corresponding to a second tunnel, and the second tunnel is configured for the access network device to send the sensing data to the UPF network element.

In an optional implementation, the second information includes one or more of the following: positioning accuracy information corresponding to sensing and collection, speed measurement accuracy information, sensing resolution information, a refresh rate of the sensing service, a miss detection rate, a false alarm rate, a transmission period of the sensing data, or transmission time of the sensing data.

In an optional implementation, the third information includes one or more of the following: a QoS identifier corresponding to the sensing data, an allocation and retention priority, a guaranteed bit rate, or a maximum bit rate.

In an optional implementation, the method further includes: The SF network element sends fifth information to the access network device, where the fifth information indicates a transmission mode of the sensing data, and the fifth information is determined based on the first information; and the transmission mode of the sensing data includes sending the sensing data via a control plane or a user plane. This implementation helps the access network device transmit the sensing data based on the fifth information, thereby helping establish the sensing service and improve sensing performance.

In an optional implementation, the method further includes: The SF network element obtains one or more of the following: first sensing area information, address information of an AF network element, or start time of the sensing service.

In an optional implementation, the method further includes: The SF network element sends, to the access network device, one or more of the following: second sensing area information, sixth information, seventh information, or the start time of the sensing service. The sixth information indicates an address of a next-hop node to which the access network device sends the sensing data. The seventh information indicates an identity of a third tunnel, and the third tunnel is configured for the access network device to send the sensing data to the SF network element.

In an optional implementation, the method further includes: The SF network element receives the sixth information and/or the seventh information from the SMF network element.

In an optional implementation, the method further includes: The SF network element sends eighth information to the SMF network element, where the eighth information indicates an address of a next-hop node to which the UPF network element sends the sensing data.

In an optional implementation, the method further includes: The SF network element receives ninth information and/or tenth information from the access network device. The ninth information indicates a QoS requirement accepted by the access network device in the QoS requirement for the sensing service. The tenth information indicates a QoS requirement accepted by the access network device in the QoS requirement for transmitting the sensing data corresponding to the sensing service.

In an optional implementation, the method further includes: The SF network element sends the tenth information to the SMF network element.

According to a second aspect, this application provides an information transmission method. The method may be applied to an SF network element, or may be applied to a chip in an SF network element, or may be applied to a logical module or software that can implement all or some functions of an SF network element. The following uses the SF network element as an example for description. The method includes: The SF network element obtains first information, where the first information indicates a requirement for a sensing service requested to be established. The SF network element sends second information and identification information to an access network device, where the second information is determined based on the first information, the second information indicates a QoS requirement for the sensing service, and the identification information is for identifying the sensing service. The SF network element sends the identification information and the first information or third information to an SMF network element, where the first information is for determining the third information, and the third information indicates a QoS requirement for transmitting sensing data corresponding to the sensing service.

Therefore, according to the method, the QoS requirement for the sensing service and the QoS requirement for transmitting the sensing data can be determined based on the requirement for the sensing service requested to be established. In the method, the SF network element sends the identification information and the first information or the third information to the SMF network element, helping the SMF network element send, to the access network device, the identification information and the QoS requirement for transmitting the sensing data. The SF network element further sends the QoS requirement for the sensing service and the identification information to the access network device, helping the access network device associate, based on the identification information, the QoS requirement for the sensing service, as sent by the SF network element, with the QoS requirement for transmitting the sensing data, as sent by the SMF network element. This helps the access network device perform sensing and transmit the sensing data based on the QoS requirement for the sensing service and the QoS requirement for transmitting the sensing data, so that the access network device performing sensing and transmitting the sensing data can meet the requirement for the sensing service. In this way, according to the method, the sensing service can be established, improving sensing performance.

In an optional implementation, the third information specifically indicates a QoS requirement corresponding to a first tunnel, and the first tunnel is configured for the access network device to send the sensing data to the SF network element through a UPF network element. The third information is for determining fourth information, the fourth information specifically indicates a QoS requirement corresponding to a second tunnel, and the second tunnel is configured for the access network device to send the sensing data to the UPF network element.

In an optional implementation, the second information includes one or more of the following: positioning accuracy information corresponding to sensing and collection, speed measurement accuracy information, sensing resolution information, a refresh rate of the sensing service, a miss detection rate, a false alarm rate, a transmission period of the sensing data, or transmission time of the sensing data.

In an optional implementation, the third information includes one or more of the following: a QoS identifier corresponding to the sensing data, an allocation and retention priority, a guaranteed bit rate, or a maximum bit rate.

In an optional implementation, the method further includes: The SF network element sends fifth information to the access network device, where the fifth information indicates a transmission mode of the sensing data, and the fifth information is determined based on the first information; and the transmission mode of the sensing data includes sending the sensing data via a control plane or a user plane. This implementation helps the access network device transmit the sensing data based on the fifth information, thereby helping establish the sensing service and improve sensing performance.

In an optional implementation, the method further includes: The SF network element obtains one or more of the following: first sensing area information, address information of an AF network element, or start time of the sensing service.

In an optional implementation, the method further includes: The SF network element sends, to the access network device, one or more of the following: second sensing area information or the start time of the sensing service.

In an optional implementation, the method further includes: The SF network element sends eighth information to the SMF network element, where the eighth information includes an address of a next-hop node to which the UPF network element sends the sensing data.

In an optional implementation, the method further includes: The SF network element receives ninth information and/or tenth information from the access network device. The ninth information indicates a QoS requirement accepted by the access network device in the QoS requirement for the sensing service. The tenth information indicates a QoS requirement accepted by the access network device in the QoS requirement for transmitting the sensing data corresponding to the sensing service.

In an optional implementation, the method further includes: The SF network element sends the tenth information to the SMF network element.

According to a third aspect, this application provides an information transmission method. The method may be applied to an SMF network element, or may be applied to a chip in an SMF network element, or may be applied to a logical module or software that can implement all or some functions of an SMF network element. The following uses the SMF network element as an example for description. The method includes: The SMF network element receives first information or fourth information from an SF network element. The first information is for determining the fourth information, and the first information indicates a requirement for a sensing service requested to be established; and the fourth information indicates a QoS requirement for transmitting sensing data corresponding to the sensing service. The SMF network element sends third information to the SF network element, where the third information is determined based on the fourth information, and the third information indicates the QoS requirement for transmitting the sensing data of the sensing service.

Therefore, the SMF network element determines, based on the first information or the fourth information from the SF network element, the QoS requirement for transmitting the sensing data, and sends, to the SF network element, the QoS requirement for transmitting the sensing data. This helps the SF network element send, to an access network device, the QoS requirement for transmitting the sensing data, and therefore helps the access network device transmit the sensing data based on the QoS requirement for transmitting the sensing data, so that the access network device transmitting the sensing data can meet the requirement for the sensing service. In this way, according to the method, the sensing service can be established, improving sensing performance.

In an optional implementation, the method further includes: The SMF network element sends the first information to a policy control function (policy control function, PCF) network element, where the first information is for determining the fourth information. The SMF network element receives the fourth information from the PCF network element.

In an optional implementation, the fourth information specifically indicates a QoS requirement corresponding to a first tunnel, and the first tunnel is configured for the access network device to send the sensing data to the SF network element through a UPF network element. The third information specifically indicates a QoS requirement corresponding to a second tunnel, and the second tunnel is configured for the access network device to send the sensing data to the UPF network element.

In an optional implementation, the third information includes one or more of the following: a QoS identifier corresponding to the sensing data, an allocation and retention priority, a guaranteed bit rate, or a maximum bit rate.

In an optional implementation, the method further includes: The SMF network element sends configuration information to the UPF network element, where the configuration information is for configuring a rule used by the UPF network element to transmit the sensing data, and the configuration information is determined based on the fourth information. The configuration information includes one or more of the following: a packet detection rule, a forwarding action rule, or a QoS enforcement rule.

In an optional implementation, the method further includes: The SMF network element sends sixth information and/or seventh information to the SF network element. The sixth information indicates an address of a next-hop node to which the access network device sends the sensing data; and the seventh information indicates an identity of a third tunnel, and the third tunnel is configured for the access network device to send the sensing data to the SF network element.

In an optional implementation, the method further includes: The SMF network element receives tenth information from the SF network element, where the tenth information indicates a QoS requirement accepted by the access network device in the QoS requirement for transmitting the sensing data corresponding to the sensing service. The SMF network element sends the tenth information to the UPF network element.

According to a fourth aspect, this application provides an information transmission method. The method may be applied to an SMF network element, or may be applied to a chip in an SMF network element, or may be applied to a logical module or software that can implement all or some functions of an SMF network element. The following uses the SMF network element as an example for description. The method includes: The SMF network element receives identification information and first information or third information from an SF network element. The first information is for determining the third information, the first information indicates a requirement for a sensing service requested to be established, and the identification information is for identifying the sensing service; and the third information indicates a QoS requirement for transmitting sensing data corresponding to the sensing service. The SMF network element sends the identification information and fourth information to an access network device, where the identification information is for associating second information with the fourth information, the second information indicates a QoS requirement for the sensing service, the fourth information is determined based on the third information, and the fourth information indicates the QoS requirement for transmitting the sensing data corresponding to the sensing service.

Therefore, the SMF network element sends, to the access network device, the identification information and the QoS requirement for transmitting the sensing data. This helps the access network device associate, based on the identification information, the QoS requirement for transmitting the sensing data, as sent by the SMF network element, with the QoS requirement for the sensing service, as sent by the SF network element, and therefore helps the access network device perform sensing and transmit the sensing data based on the QoS requirement for the sensing service and the QoS requirement for transmitting the sensing data, so that the access network device performing sensing and transmitting the sensing data can meet the requirement for the sensing service. In this way, according to the method, the sensing service can be established, improving sensing performance.

In an optional implementation, the method further includes: The SMF network element sends the first information to a PCF network element, where the first information is for determining the third information. The SMF network element receives the third information from the PCF network element.

In an optional implementation, the third information indicates a QoS requirement corresponding to a first tunnel, and the first tunnel is configured for the access network device to send the sensing data to the SF network element through a UPF network element. The fourth information specifically indicates a QoS requirement corresponding to a second tunnel, and the second tunnel is configured for the access network device to send the sensing data to the UPF network element.

In an optional implementation, the third information includes one or more of the following: a QoS identifier corresponding to the sensing data, an allocation and retention priority, a guaranteed bit rate, or a maximum bit rate.

In an optional implementation, the method further includes: The SMF network element sends configuration information to the UPF network element, where the configuration information is for configuring a rule used by the UPF network element to transmit the sensing data, and the configuration information is determined based on the third information. The configuration information includes one or more of the following: a packet detection rule, a forwarding action rule, or a QoS enforcement rule.

In an optional implementation, the method further includes: The SMF network element sends sixth information and/or seventh information to the access network device. The sixth information indicates an address of a next-hop node to which the access network device sends the sensing data; and the seventh information indicates an identity of a third tunnel, and the third tunnel is configured for the access network device to send the sensing data to the SF network element.

In an optional implementation, the method further includes: The SMF network element receives tenth information from the SF network element, where the tenth information indicates a QoS requirement accepted by the access network device in the QoS requirement for transmitting the sensing data corresponding to the sensing service. The SMF network element sends the tenth information to the UPF network element.

According to a fifth aspect, this application further provides a communication apparatus. The communication apparatus may be an SF network element, or may be a chip in an SF network element, or may be a logical module or software that can implement all or some functions of an SF network element. The communication apparatus has functions for implementing some or all of the implementations in the first aspect or the second aspect. Alternatively, the communication apparatus may be an SMF network element, or may be a chip in an SMF network element, or may be a logical module or software that can implement all or some functions of an SMF network element. The communication apparatus has functions for implementing some or all of the implementations in the third aspect or the fourth aspect. The functions may be implemented by hardware, or may be implemented by hardware executing corresponding software. The hardware or the software includes one or more units or modules corresponding to the functions.

In a possible design, a structure of the communication apparatus may include a processing unit, and the processing unit is configured to support the communication apparatus in performing a corresponding function in the foregoing method. Optionally, the communication apparatus further includes a communication unit, and the communication unit is configured to support communication between the communication apparatus and another communication apparatus. Optionally, the communication apparatus may further include a storage unit, and the storage unit is configured to be coupled to the processing unit and the communication unit, and stores program instructions and data that are necessary for the communication apparatus. In addition, the processing unit may be configured to control the communication unit to send and receive data/signaling.

In an implementation, the processing unit is configured to obtain first information, where the first information indicates a requirement for a sensing service requested to be established. The communication unit is configured to send second information and third information to an access network device, where the second information and the third information are determined based on the first information, the second information indicates a QoS requirement for the sensing service, and the third information indicates a QoS requirement for transmitting sensing data corresponding to the sensing service.

In addition, for another optional implementation of the communication apparatus in this aspect, refer to related content in the first aspect. Details are not described herein again.

In another implementation, the processing unit is configured to obtain first information, where the first information indicates a requirement for a sensing service requested to be established. The communication unit is configured to send second information and identification information to an access network device, where the second information is determined based on the first information, the second information indicates a QoS requirement for the sensing service, and the identification information is for identifying the sensing service. The SF network element sends the identification information and the first information or third information to an SMF network element, where the first information is for determining the third information, and the third information indicates a QoS requirement for transmitting sensing data corresponding to the sensing service.

In addition, for another optional implementation of the communication apparatus in this aspect, refer to related content in the second aspect. Details are not described herein again.

In another implementation, the communication unit is configured to receive first information or fourth information from an SF network element. The first information is for determining the fourth information, and the first information indicates a requirement for a sensing service requested to be established; and the fourth information indicates a QoS requirement for transmitting sensing data corresponding to the sensing service. The communication unit is further configured to send third information to the SF network element, where the third information is determined based on the fourth information, and the third information indicates the QoS requirement for transmitting the sensing data of the sensing service.

In addition, for another optional implementation of the communication apparatus in this aspect, refer to related content in the third aspect. Details are not described herein again.

In another implementation, the communication unit is configured to receive identification information and first information or third information from an SF network element. The first information is for determining the third information, the first information indicates a requirement for a sensing service requested to be established, and the identification information is for identifying the sensing service; and the third information indicates a QoS requirement for transmitting sensing data corresponding to the sensing service. The communication unit is further configured to send the identification information and fourth information to an access network device, where the identification information is for associating second information with the fourth information, the second information indicates a QoS requirement for the sensing service, the fourth information is determined based on the third information, and the fourth information indicates the QoS requirement for transmitting the sensing data corresponding to the sensing service.

In addition, for another optional implementation of the communication apparatus in this aspect, refer to related content in the fourth aspect. Details are not described herein again.

For example, the communication unit may be a transceiver or a communication interface, the storage unit may be a memory, and the processing unit may be a processor. The processor is coupled to the memory. The memory is configured to store a program or instructions processor. The processor may be configured to enable, when the program or instructions are executed by the processor, the communication apparatus to perform the method according to the first aspect. The transceiver or the communication interface may be configured to send and receive signals and/or data.

In an implementation, the transceiver is configured to obtain first information, where the first information indicates a requirement for a sensing service requested to be established. The transceiver is configured to send second information and third information to an access network device, where the second information and the third information are determined based on the first information, the second information indicates a QoS requirement for the sensing service, and the third information indicates a QoS requirement for transmitting sensing data corresponding to the sensing service.

In addition, for another optional implementation of the communication apparatus in this aspect, refer to related content in the first aspect. Details are not described herein again.

In another implementation, the processor is configured to obtain first information, where the first information indicates a requirement for a sensing service requested to be established. The transceiver is configured to send second information and identification information to an access network device, where the second information is determined based on the first information, the second information indicates a QoS requirement for the sensing service, and the identification information is for identifying the sensing service. The SF network element sends the identification information and the first information or third information to an SMF network element, where the first information is for determining the third information, and the third information indicates a QoS requirement for transmitting sensing data corresponding to the sensing service.

In addition, for another optional implementation of the communication apparatus in this aspect, refer to related content in the second aspect. Details are not described herein again.

In another implementation, the transceiver is configured to receive first information or fourth information from an SF network element. The first information is for determining the fourth information, and the first information indicates a requirement for a sensing service requested to be established; and the fourth information indicates a QoS requirement for transmitting sensing data corresponding to the sensing service. The transceiver is further configured to send third information to the SF network element, where the third information is determined based on the fourth information, and the third information indicates the QoS requirement for transmitting the sensing data of the sensing service.

In addition, for another optional implementation of the communication apparatus in this aspect, refer to related content in the third aspect. Details are not described herein again.

In another implementation, the transceiver is configured to receive identification information and first information or third information from an SF network element. The first information is for determining the third information, the first information indicates a requirement for a sensing service requested to be established, and the identification information is for identifying the sensing service; and the third information indicates a QoS requirement for transmitting sensing data corresponding to the sensing service. The transceiver is further configured to send the identification information and fourth information to an access network device, where the identification information is for associating second information with the fourth information, the second information indicates a QoS requirement for the sensing service, the fourth information is determined based on the third information, and the fourth information indicates the QoS requirement for transmitting the sensing data corresponding to the sensing service.

In addition, for another optional implementation of the communication apparatus in this aspect, refer to related content in the fourth aspect. Details are not described herein again.

In another implementation, the communication apparatus is a chip or a chip system. The processing unit may alternatively be implemented as a processing circuit or a logic circuit. The transceiver unit may be an input/output interface, an interface circuit, an output circuit, an input circuit, a pin, a related circuit, or the like on the chip or chip system.

In an implementation process, the processor may be configured to perform, for example, but not limited to, baseband-related processing; and the transceiver or the communication interface may be configured to perform, for example, but not limited to, radio frequency sending and receiving. The foregoing components may be separately disposed on chips that are independent of each other, or at least some or all of the components may be disposed on a same chip. For example, the processor may further be divided into an analog baseband processor and a digital baseband processor. The analog baseband processor and the transceiver (or the communication interface) may be integrated on a same chip, and the digital baseband processor may be disposed on an independent chip. With continuous development of an integrated circuit technology, an increasing quantity of components may be integrated on a same chip. For example, the digital baseband processor and a plurality of application processors (for example, but not limited to, a graphics processing unit and a multimedia processor) may be integrated on a same chip. The chip may be referred to as a system on chip (system on chip, SoC). Whether the components are independently disposed on different chips or integrated on one or more chips usually depends on a requirement for a product design. Implementations of the foregoing components are not limited in embodiments of this application.

According to a sixth aspect, this application further provides a processor configured to perform the foregoing methods. In processes of performing these methods, a process of sending the foregoing information and a process of receiving the foregoing information in the foregoing methods may be understood as a process of outputting the foregoing information by the processor and a process of inputting the foregoing information by the processor. When outputting the foregoing information, the processor outputs the foregoing information to a transceiver, for the transceiver (or a communication interface) to transmit the information. After output by the processor, the foregoing information may further require other processing before reaching the transceiver (or the communication interface). Similarly, when the processor receives the foregoing input information, the transceiver (or the communication interface) receives the foregoing information and inputs the information to the processor. Further, after received by the transceiver (or the communication interface), the foregoing information may require other processing, and then may be input to the processor.

Unless otherwise specified, operations such as sending and receiving related to the processor may be more generally understood as operations such as outputting, receiving, and inputting of the processor if the operations do not conflict with actual functions or internal logic of the operations in related descriptions, instead of operations such as sending and receiving directly performed by a radio frequency circuit and an antenna.

In an implementation process, the processor may be a processor specially configured to perform these methods, or may be a processor that executes computer instructions in a memory to perform these methods, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of arranging the memory and the processor are not limited in embodiments of this application.

According to a seventh aspect, this application further provides a communication system. The system includes an apparatus configured to perform the method according to the first aspect. Optionally, the system includes an apparatus configured to perform the method according to the third aspect. In another possible design, the system may further include another device that interacts with the apparatus configured to perform the method according to the first aspect, and/or another device that interacts with the apparatus configured to perform the method according to the third aspect in the solutions provided in this application.

According to an eighth aspect, this application further provides a communication system. The system includes an apparatus configured to perform the method according to the second aspect and an apparatus configured to perform the method according to the fourth aspect. In another possible design, the system may further include another device that interacts with the apparatus configured to perform the method according to the second aspect, and/or another device that interacts with the apparatus configured to perform the method according to the fourth aspect in the solutions provided in this application.

According to a ninth aspect, this application provides a computer-readable storage medium. The computer-readable storage medium stores a computer program. When the computer program is run, the method according to any one of the first aspect to the fourth aspect is performed.

According to a tenth aspect, this application further provides a computer program product including instructions. The computer program product includes computer program code. When the computer program code is run, the method according to any one of the first aspect to the fourth aspect is performed.

According to an eleventh aspect, this application provides a chip system. The chip system includes a processor and an interface. The interface is configured to obtain a program or instructions. The processor is configured to call the program or instructions to implement functions in any one of the first aspect to the fourth aspect. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

FIG. 1 is a diagram of a network architecture based on a service-based interface;
FIG. 2 is a diagram of a network architecture based on a point-to-point interface;
FIG. 3 is a schematic flowchart of an information transmission method 100 according to an embodiment of this application;
FIG. 4 is a diagram of determining third information according to an embodiment of this application;
FIG. 5 is another diagram of determining third information according to an embodiment of this application;
FIG. 6 is another diagram of determining third information according to an embodiment of this application;
FIG. 7 is a schematic flowchart of an information transmission method 200 according to an embodiment of this application;
FIG. 8A to FIG. 8D are a diagram of another information transmission method according to an embodiment of this application;
FIG. 9A to FIG. 9D are a diagram of another information transmission method according to an embodiment of this application;
FIG. 10A and FIG. 10B are a diagram of another information transmission method according to an embodiment of this application;
FIG. 11A to FIG. 11D are a diagram of another information transmission method according to an embodiment of this application;
FIG. 12A to FIG. 12D are a diagram of another information transmission method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following describes embodiments of this application with reference to the accompanying drawings in embodiments of this application.

Before embodiments of this application are described, the following several descriptions are first provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

It may be understood that some optional features in embodiments of this application may be independent of other features in some scenarios, or may be combined with other features in some scenarios. This is not limited.

It may be understood that the solutions in embodiments of this application may be used in combination, and explanations or descriptions of terms and similar operations or steps in embodiments may be mutually referenced or explained in embodiments. This is not limited in this application.

Second, in this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be singular or plural.

Third, in this application, "first", "second", and various numbers indicate differentiation for ease of description, but are not intended to limit the scope of embodiments of this application, for example, are intended to distinguish between different messages but not to describe a specific order or sequence. It should be understood that objects described herein are interchangeable in an appropriate case, so that a solution other than embodiments of this application can be described.

Fourth, in this application, the terms "include", "have", and any variants thereof are intended to cover non-exclusive inclusion. For example, a process, method, system, product, or device that includes a series of steps or units is not necessarily limited to those expressly listed steps or units, but may include other steps or units not expressly listed or inherent to such a process, method, product, or device.

Fifth, in this application, "indicate" may include a direct indication and an indirect indication. When a piece of indication information is described as indicating A, the indication information may directly indicate A or indirectly indicate A, but it does not indicate that the indication information definitely carries A.

Sixth, in this application, "sending information to XX (a device/network element)" may be understood as that a destination of the information is the device, and may include directly or indirectly sending the information to the device. "Receiving information from XX (a device/network element) or receiving information that is from XX (a device/network element)" may be understood as that a source of the information is the device, and may include directly or indirectly receiving the information from the device. The information may undergo necessary processing, for example, a format change, between the source for sending the information and the destination. However, the destination may understand valid information from the source.

Network architectures and service scenarios described in embodiments of this application are intended to describe the technical solutions in embodiments of this application more clearly, and do not constitute a limitation on the technical solutions provided in embodiments of this application. A person of ordinary skill in the art may know that, with the evolution of the network architectures and the emergence of new service scenarios, the technical solutions provided in embodiments of this application are also applicable to similar technical problems.

The technical solutions in embodiments of this application may be applied to various communication systems, such as a global system for mobile communications, a long term evolution (long term evolution, LTE) system, a universal mobile telecommunications system, a 4th generation (4th generation, 4G) mobile communication system, a 4.5th generation (4.5th generation, 4.5G) mobile communication system, and a 5th generation (5th generation, 5G) mobile communication system. In addition, with continuous development of communication technologies, the technical solutions in embodiments of this application may be further applied to subsequently evolved communication systems, such as a 6th generation (6th generation, 6G) mobile communication system and a 7th generation (7th generation, 7G) mobile communication system.

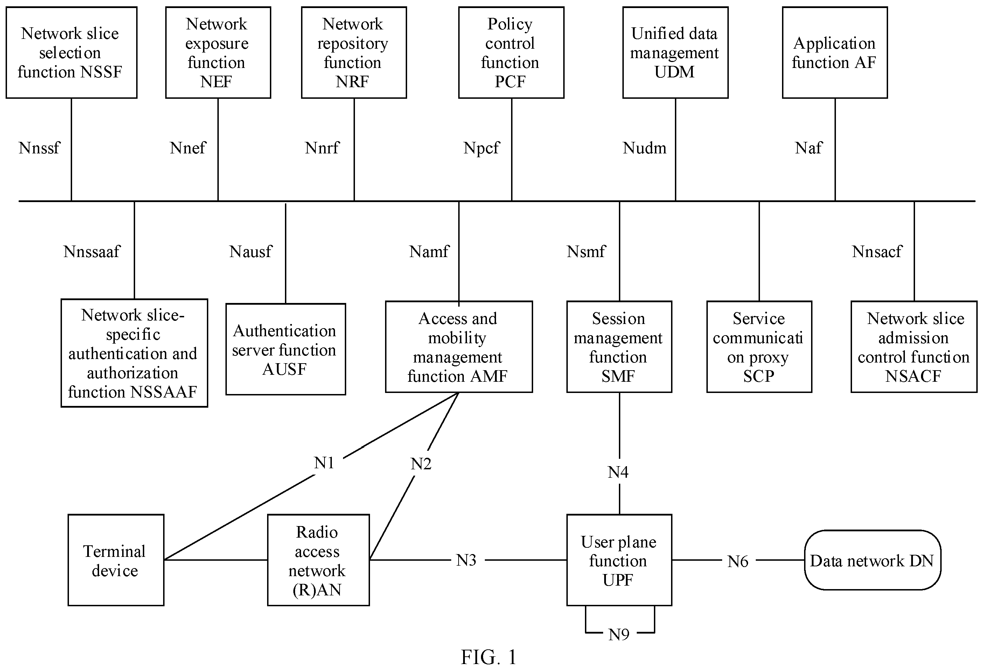

FIG. 1 is a diagram of a network architecture based on a service-based interface. The 5G network architecture shown in FIG. 1 includes a terminal device, a data network (data network, DN), and an operator network (the operator network may also be a network for short). The operator network includes a (radio) access network ((radio) access network, (R)AN) and a core network (core network, CN). The (R)AN is configured to access the terminal device to a wireless network, and the core network is configured to manage the terminal device and provide a gateway for communication with the DN. The core network includes one or more of the following network elements: a network slice selection function (network slice selection function, NSSF) network element, a network slice-specific authentication and authorization function (network slice-specific authentication and authorization function, NSSAAF) network element, an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, a user plane function (user plane function, UPF) network element, a service communication proxy (service communication proxy, SCP) network element, a network slice admission control function (network slice admission control function, NSACF) network element, and the like.

Specifically, in FIG. 1, a service-based interface provided by the NSSF network element is Nnssf; a service-based interface provided by the NEF network element is Nnef; a service-based interface provided by the NRF network element is Nnrf; a service-based interface provided by the PCF network element is Npcf; a service-based interface provided by the UDM network element is Nudm; a service-based interface provided by the AF network element is Naf; a service-based interface provided by the NSSAAF network element is Nnssaaf; a service-based interface provided by the AUSF network element is Nausf; a service-based interface provided by the AMF network element is Namf; a service-based interface provided by the SMF network element is Nsmf; and a service-based interface provided by the NSACF network element is Nnsacf. The terminal device communicates with the AMF network element through an N1 interface. The RAN communicates with the AMF network element through an N2 interface. The RAN communicates with the UPF network element through an N3 interface. The UPF network element communicates with the SMF network element through an N4 interface. Two UPF network elements communicate with each other through an N9 interface. The UPF network element communicates with the DN through an N6 interface.

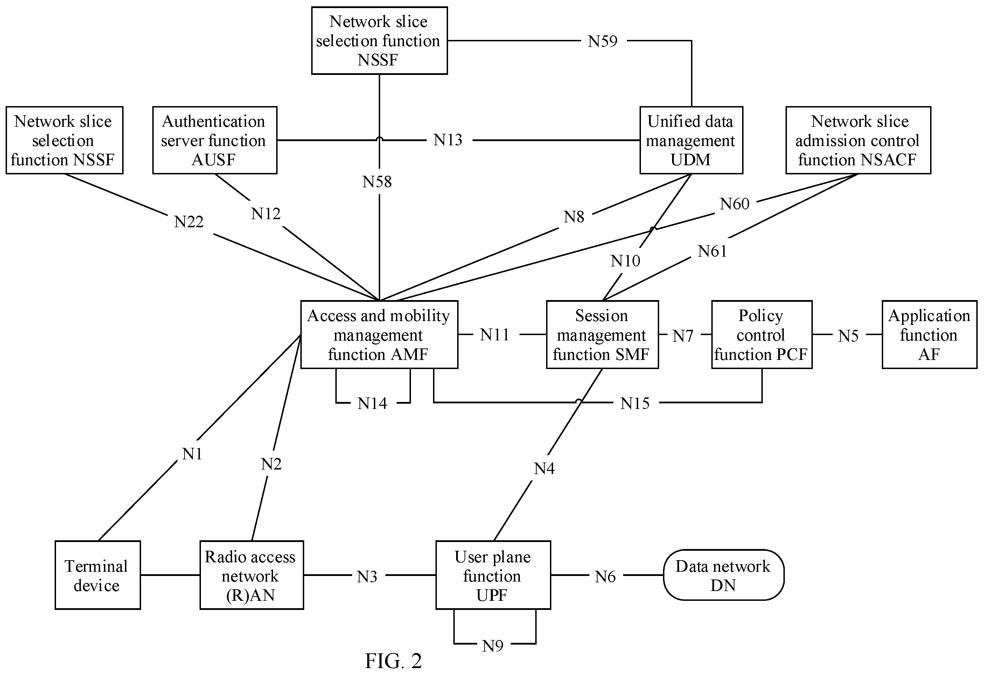

FIG. 2 is a diagram of a network architecture based on a point-to-point interface. A difference between the 5G network architecture shown in FIG. 2 and the 5G network architecture shown in FIG. 1 lies in that an interface between network elements in FIG. 2 is a point-to-point interface instead of a service-based interface. Specifically, in FIG. 2, the AMF network element communicates with the terminal device through an N1 interface. The AMF network element communicates with the RAN through an N2 interface. Different AMF network elements communicate with each other through an N14 interface. The AMF network element communicates with the SMF network element through an N11 interface. The AMF network element communicates with the PCF network element through an N15 interface. The AMF network element communicates with the NSSF network element through an N22 interface. The AMF network element communicates with the AUSF network element through an N12 interface. The AMF network element communicates with the NSSAAF network element through an N58 interface. The AMF network element communicates with the UDM network element through an N8 interface. The AMF network element communicates with the NSACF network element through an N60 interface. The UPF network element communicates with the RAN through an N3 interface. The UPF network element communicates with the SMF network element through an N4 interface. The UPF network element communicates with the DN through an N6 interface. Two UPF network elements communicate with each other through an N9 interface. The SMF network element communicates with the UDM network element through an N10 interface. The SMF network element communicates with the NSACF network element through an N61 interface. The SMF network element communicates with the PCF network element through an N7 interface. The PCF network element communicates with the AF network element through an N5 interface. The UDM network element communicates with the AUSF network element through an N13 interface. The UDM network element communicates with the NSSAAF network element through an N59 interface.

In embodiments of this application, the terminal device may also be referred to as user equipment (user equipment, UE), a terminal, an access terminal, a subscriber unit, a subscriber station, a mobile station, a mobile station, a remote station, a remote terminal, a mobile device, a user terminal, a user agent, or a user apparatus, and may be used in a 4G system, a 5G system, or even a 6G system. In embodiments of this application, the terminal device may be a joint device that transmits and receives a digital signal over an ordinary telephone line, or may be a cellular phone, a cordless phone, a session initiation protocol (session initiation protocol, SIP) phone, a wireless local loop (wireless local loop, WLL) station, a personal digital assistant (personal digital assistant, PDA), a mobile phone (mobile phone), a tablet computer (pad), a computer with a wireless transceiver function, a head-mounted display (head-mounted display, HMD), a virtual reality (virtual reality, VR) terminal device (for example, VR glasses), an augmented reality (augmented reality, AR) terminal device (for example, AR glasses), a mixed reality (mixed reality, MR) terminal device, a wireless terminal in industrial control (industrial control), a processing device connected to a wireless modem, a tactile terminal device, an on-board terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a roadside unit (roadside unit, RSU) of the foregoing wireless terminal type, a wearable terminal device, or the like.

An access network device in the (R)AN includes but is not limited to: a base station (base station, BS), a radio network controller (radio network controller, RNC), a base station controller (base station controller, BSC), a network device transceiver station (base transceiver station, BTS), a home network device (for example, a home evolved NodeB or a home NodeB, HNB), a baseband unit (baseband unit, BBU), a wireless relay node, a wireless backhaul node, and a transmission point (transmission and reception point, TRP; or transmission point, TP). The base station is an apparatus that can provide a wireless communication function and that is deployed in a radio access network. The base station may also be referred to as a base station device, such as an evolved NodeB (evolved NodeB, eNB or e-NodeB) in an LTE system, a NodeB (NodeB), a base station in a 5G system (gNodeB or gNB), or a base station in a 6G system. The base station may include a BBU and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at one rack. The base station may be in the following forms: a macro base station, a micro base station (also referred to as a small cell), a picocell base station, a relay station, an access point, a balloon station, and the like. Optionally, in some deployment of the access network device, the access network device may include a central unit (central unit, CU), a distributed unit (distributed unit, DU), and the like. In some other deployment of the access network device, the CU may be further divided into a CU-control plane (control plane, CP), a CU-user plane (user plane, UP), and the like. In still some other deployment of the access network device, the access network device may alternatively be in an open radio access network (open radio access network, ORAN) architecture or the like. A specific deployment manner of the access network device is not limited in this application.

The AMF network element is responsible for mobility management of the terminal device, including mobile status management, allocation of a temporary identity of the terminal device, and authentication and authorization of the terminal device.

The SMF network element is responsible for user plane network element selection, user plane network element reselection, and Internet Protocol (Internet Protocol, IP) address allocation, and is also responsible for bearer establishment, modification, and release, and responsible for quality of service (quality of service, QoS) control. In a 5G system, an interface used for communication between the SMF network element and the UPF network element is an N4 interface, with specific functions including: configuration of details for PDU session data forwarding (such as a forwarding rule and a QoS assurance rule), event reporting, exchange of network element-level configuration information, and the like.

The UDM network element is responsible for managing subscription data, and is responsible for notifying a corresponding network element when the subscription data is modified.

The UDR network element is configured to store and retrieve subscription data, policy data, common architecture data, and the like, and is further configured for the UDM network element, the PCF network element, and the NEF network element to obtain related data. The UDR network element needs to provide different data access authentication mechanisms for different types of data, such as subscription data and policy data, to ensure data access security. For an unauthorized service-based operation or data access request, the UDR network element needs to return a failure response carrying an appropriate cause value.

The AF network element is configured to provide an application-layer service for the terminal device. When providing a service for the terminal device, the AF network element has requirements on a QoS policy (policy) and a charging (charging) policy, and needs to notify a network. In addition, the AF network element also requires application-related information fed back from a core network.

The UPF network element supports all or some of the following functions: interconnection between a PDU session and a data network, packet routing and forwarding, and packet detection. The UPF network element supports packet routing and forwarding. For example, the UPF network element supports processing traffic through an uplink classifier (uplink classifier, UL CL) and then forwarding the traffic to a data network, and supports a branching point (branching point) to support a multi-homed (multi-homed) PDU session.

In addition, the communication system to which embodiments of this application are applicable further includes a sensing function (sensing function, SF) network element. The SF supports some or all of the following functions: a session management function for sensing data transmission (for example, determining QoS for transmitting sensing data), management of sensing accuracy parameters (for example, based on a requirement of the AF network element, obtaining corresponding sensing accuracy that can be processed on a network side), and sensing data processing (for example, converting sensing measurement data into final target result information of sensing).

It should be noted that the SF network element may be one of network elements in a core network, or may be a non-core network element. This is not particularly limited in this application. When the SF network element is one of the network elements in the core network, the SF network element may be connected to another network element in the core network through a service-based architecture (service-based architecture, SBA) interface, that is, may communicate with another network element in the core network through the SBA interface. However, when the SF network element is a non-core network element, the SF network element may not be connected to another network element in the core network through the SBA interface. In this case, the SF network element may need to interact with another core network element via the NEF network element as an intermediary.

In a possible implementation, the SF network element may have a control plane and a user plane that are separated, that is, an SF control plane (SF control plane, SF-C) function and an SF user plane (SF user plane, SF-U) function are separated. The SF-C can send a control command to the access network device via the control plane. The SF-U can receive sensing data from the access network device via a data plane, and optionally process the sensing data to obtain a sensing result.

In addition, the SF network element may be an independent network element, and the SF network element may communicate with another network element/device through an external interface. Alternatively, the SF may be a logical function of another network element. For example, the SF may be one of logical functions of a location management function (location management function, LMF) network element. Alternatively, the SF may be integrated with another function. A name of a network element obtained through integration is not limited in this application. For example, the SF may be integrated with the SMF and/or the UPF, and a network element obtained through the integration is named an SF network element or has another name. Based on an actual requirement, the SF may alternatively have another possible case. This is not limited. For ease of description, the following uses an SF network element as an example for description. The SF network element is an independent network element, or the SF network element is a network element obtained by integrating the SF with another function. Similarly, in a case in which the SF is a logical function of another network element, an operation performed by the SF network element below is performed by the network element to which the SF belongs. Details are not described again.

It may be understood that embodiments of this application are described by using a 5G system as an example. When the solutions in embodiments of this application are applied to a 6G communication system or another communication system, a corresponding network element name, network element deployment manner, interface, and the like may change. This is not limited in this application.

The following describes embodiments of this application in detail with reference to the accompanying drawings. In embodiments of this application, an example in which an SF network element and an access network device are used as execution bodies is used to illustrate a corresponding method. However, an execution body of a method is not limited in this application. For example, a network element/device in the method may be a chip, a chip system, or a processor that supports the network element/device in implementing the corresponding method, or may be a logical module or software that can implement all or some functions of the network element/device.

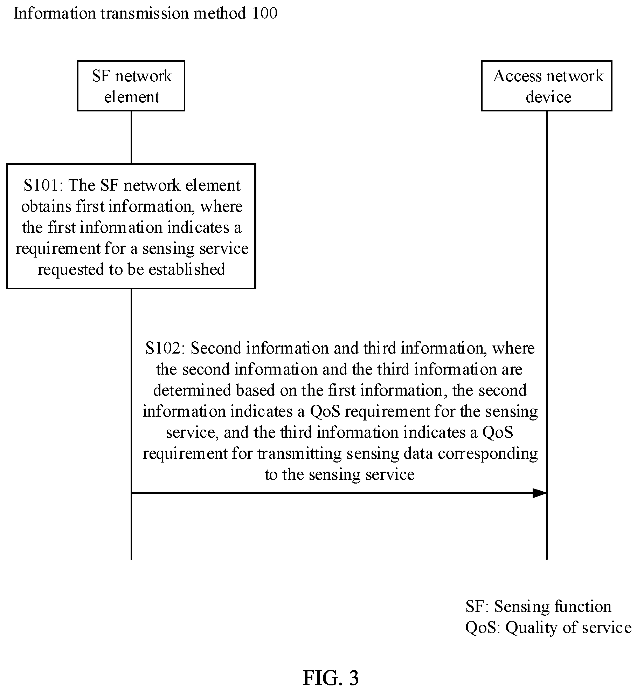

FIG. 3 is a schematic flowchart of an information transmission method 100 according to an embodiment of this application. The information transmission method 100 includes the following steps.

S101: The SF network element obtains first information, where the first information indicates a requirement for a sensing service requested to be established.

In an optional implementation, the first information includes one or more of the following: information related to sensing service quality, information related to sensing data transmission control, or information related to sensing data.

The information related to sensing service quality includes a type of the sensing service and/or a requirement for the sensing service. The type of the sensing service is, for example, an Internet of Vehicles service or an unmanned aerial vehicle intrusion detection service. The requirement for the sensing service includes, for example, requirements for positioning accuracy, speed measurement accuracy, sensing resolution, and latency. In some scenarios, the requirement for the sensing service may be understood as a requirement for performing sensing measurement, and the sensing measurement is performed to obtain sensing data of the sensing service.

The information related to sensing data transmission control indicates a requirement for transmitting sensing data. For example, frequency of transmitting sensing data is single transmission of the sensing data, or periodic transmission of the sensing data, or triggered transmission of the sensing data. The triggered transmission of the sensing data may be understood as: transmitting the sensing data when a trigger condition is met. For example, a trigger condition for the access network device to transmit the sensing data is that information for requesting transmission of the sensing data is obtained. To be specific, the access network device transmits the sensing data when/after obtaining the information for requesting transmission of the sensing data. In addition, in an embodiment of this application, transmission of the sensing data may be uplink transmission of the sensing data, and the uplink transmission of the sensing data may also be understood as reporting of the sensing data. For example, that the access network device transmits the sensing data may be: The access network device sends the sensing data to the UPF network element or the SF network element. The UPF network element may be, for example, a sensing UPF network element (namely, a sensing-UPF network element). Details are not described again below.

The information related to sensing data indicates a requirement for a type of the transmitted sensing data. For example, a required type of the sensing data is point cloud (point cloud) information, and the point cloud information is a set formed by points on a reflective surface of an object that reflects a sensing signal, where the sensing signal is a signal for sensing. For example, a required type of the sensing data is a sensing result, and the sensing result may also be understood as a final measurement result. The final measurement result may be, for example, description information of a measured object. For example, the description information of the measured object includes a speed, size, and reflection cross-sectional area of the object. The final measurement result may alternatively be, for example, description information of an event. For example, the description information of the event is for describing whether there is an intruder in a given sensing area; or the description information of the event is for describing a rendered three-dimensional (three-dimensional, 3D) map.

Moreover, in addition to the mentioned content, the first information may further include another requirement for the sensing service. This is not limited.

Moreover, in an embodiment of this application, sensing data may correspond to one sensing service, or may correspond to a plurality of sensing services. The sensing data may be obtained by the access network device performing sensing and collection for the sensing service, or the sensing data may be obtained by the access network device performing sensing and collection based on a capability of the access network device and then used for the sensing service. This is not limited herein.

In an optional implementation, that the SF network element obtains the first information includes: The SF network element receives the first information from an AF network element. In addition, in an embodiment of this application, the "AF network element" may be replaced with "application server", "third-party application", "data collector", "application requester", or the like. Details are not described again below.

Optional manner a: The AF network element directly sends the first information to the SF network element. This manner may be applied to a case in which the AF network element is located within a trust domain (trust domain) of a network. In this case, the AF network element may directly send the first information to the SF network element in the network.

Optional manner b: The AF network element sends the first information to the SF network element through an intermediate network element. For example, the AF network element sends the first information to the SF network element through an NEF network element. Specifically, the AF network element sends the first information to the NEF network element. Correspondingly, the NEF network element receives the first information from the AF network element. Then, the NEF network element sends the first information to the SF network element. In addition, it should be noted that, what the NEF network element sends to the SF network element may be the first information received by the NEF network element from the AF network element, or may be information generated by the NEF network element based on the first information sent by the AF network element. For ease of description, in an embodiment of this application, an example in which the SF network element receives the first information is used for description. A case in which the SF network element receives the information generated by the NEF network element based on the first information sent by the AF network element is similar thereto, and details are not described again.

Optionally, the method further includes: The NEF network element authenticates the AF network element. In this manner, after the NEF network element successfully authenticates the AF network element, the NEF network element may send information (for example, the first information) from the AF network element to the SF network element, or the NEF network element processes information from the AF network element and then sends the processed information to the SF network element. For example, that the NEF network element authenticates the AF network element includes: The NEF network element authenticates related information of the AF network element (for example, the NEF network element determines whether the AF network element is authorized to request the sensing service), and/or the NEF network element authenticates information sent by the AF network element (for example, the NEF network element determines whether the AF network element is allowed to request the sensing service with specific accuracy).

In addition, a manner in which the SF network element obtains the first information is not limited in embodiments of this application. Instead of the manner in which the SF network element receives the first information, the SF network element may obtain the first information in another manner. For example, the SF network element locally configures the first information, or the SF network element subscribes to the first information, or the SF network element obtains the first information through a UDM network element.

In an optional implementation, the method further includes: The SF network element obtains one or more of the following: first sensing area information, address information of an AF network element, or start time of the sensing service.

The first sensing area information is information at tracking area (tracking area, TA) granularity or information at cell (cell) granularity (for example, including a cell ID), or may be information at other granularity that can be understood by a network element in the network. This is not limited.

The address information of the AF network element indicates a destination address to which the SF network element sends (or reports) the sensing data after collecting the sensing data. A representation form of the address information of the AF network element is not limited in embodiments of this application. For example, Internet Protocol (Internet Protocol, IP) address and port number information corresponding to the AF network element is used to represent the address information of the AF network element. In another example, fully qualified domain name (fully qualified domain name, FQDN) information corresponding to the AF network element is used to represent the address information of the AF network element, and the FQDN information is, for example, somehost.example.com. In another example, application (application) identity (identity, ID) information corresponding to the AF network element is used to represent the address information of the AF network element. In addition, it should be noted that, in an embodiment of this application, what the SF network element sends (or reports) to the AF network element may be the sensing data collected by the SF network element, or may be data obtained after the SF network element processes the collected sensing data. This is not limited herein.

Optionally, that the SF network element obtains the address information of the AF network element and/or the start time of the sensing service includes: The SF network element receives the address information of the AF network element and/or the start time of the sensing service that are/is sent by the AF network element. This is similar to that the SF network element receives the first information from the AF network element, and details are not described again. However, a manner in which the SF network element obtains the address information of the AF network element and/or the start time of the sensing service is not limited in embodiments of this application. Instead of the manner in which the SF network element receives the address information of the AF network element and/or the start time of the sensing service, the SF network element may obtain the address information of the AF network element and/or the start time of the sensing service in another manner. For example, the SF network element locally configures the address information of the AF network element and/or the start time of the sensing service, or the SF network element subscribes to the address information of the AF network element and/or the start time of the sensing service, or the SF network element obtains the address information of the AF network element and/or the start time of the sensing service through a UDM network element.

Optionally, that the SF network element obtains the first sensing area information includes: The SF network element receives the first sensing area information directly sent by the AF network element to the SF network element. This manner may be applied to a case in which the AF network element is located within a trust domain (trust domain) of a network. In this case, the AF network element may directly send the first sensing area information to the SF network element in the network.

Optionally, that the SF network element obtains the first sensing area information includes: The SF network element receives the first sensing area information from an NEF network element. Specifically, the AF network element sends third sensing area information to the NEF network element. If the NEF network element successfully authenticates the AF network element, the NEF network element determines the first sensing area information based on the third sensing area information, and sends the first sensing area information to the SF network element. The third sensing area information is information at TA granularity or information at cell granularity or information at geographical area granularity or geographical address granularity, or may be information at other granularity. This is not limited herein.

The first sensing area information is the same as or different from the third sensing area information. For example, the third sensing area information is information at TA granularity or information at cell granularity or information at other granularity that can be understood by a network element in the network, and the first sensing area information may be the same as the third sensing area information. In another example, the third sensing area information is information at geographical area granularity or geographical address granularity or information at other granularity that cannot be understood by a network element in the network, and the first sensing area information is different from the third sensing area information. It may be understood that, after receiving the third sensing area information from the SF network element, the NEF network element adjusts the third sensing area information that cannot be understood by the network element in the network to the first sensing area information that can be understood by the network element in the network, and then sends the first sensing area information to the SF network element.

In addition, a manner in which the SF network element obtains the first sensing area information is not limited in embodiments of this application. Instead of the manner in which the SF network element receives the first sensing area information, the SF network element may obtain the first sensing area information in another manner. For example, the SF network element locally configures the first sensing area information, or the SF network element subscribes to the first sensing area information, or the SF network element obtains the first sensing area information through a UDM network element.

In an optional implementation, the method further includes: The SF network element obtains information for requesting establishment of the sensing service.

Optional manner a: The AF network element directly sends, to the SF network element, the information for requesting establishment of the sensing service. This implementation may be applied to a case in which the AF network element is located within a trust domain of a network. Optionally, the information for requesting establishment of the sensing service further carries one or more of the following: first information, first sensing area information, address information of the AF network element, or start time of the sensing service.

Optional manner b: The AF network element sends, to an intermediate network element, the information for requesting establishment of the sensing service, and the intermediate network element sends, to the SF network element, the information for requesting establishment of the sensing service. The intermediate network element may be, for example, an NEF network element and/or a UDM network element, and the information for requesting establishment of the sensing service, as sent by the NEF network element and/or the UDM network element to the SF network element, may be, for example, a sensing session establishment request (namely, Nsf_SensingSession_Create request) message.

Optionally, the information for requesting establishment of the sensing service, as sent by the AF network element to the intermediate network element, further carries one or more of the following: first information, third sensing area information, address information of the AF network element, or start time of the sensing service. Optionally, the information for requesting establishment of the sensing service, as sent by the intermediate network element to the SF network element, further carries one or more of the following: first information, first sensing area information, address information of the AF network element, or start time of the sensing service. The first sensing area information is determined based on the third sensing area information.

Optional manner c: The SF network element obtains, through a network configuration, the information for requesting establishment of the sensing service. For example, an operating and maintenance (operating and maintenance, OAM) system may provide, for the SF network element, the information for requesting establishment of the sensing service.

In addition, for specific descriptions of the first information, the first sensing area information, the third sensing area information, the address information of the AF network element, and the start time of the sensing service, refer to the foregoing related descriptions. Details are not described again.

In an optional implementation, the method further includes: The NEF network element determines the SF network element. This manner may be applied to a scenario in which the NEF network element successfully authenticates the AF network element. In this case, after receiving information (such as the first information, the third sensing area information, the address information of the AF network element, the start time of the sensing service, and the information for requesting establishment of the sensing service) from the AF network element, the NEF network element can send the information (such as the first information, the first sensing area information, the address information of the AF network element, the start time of the sensing service, and the information for requesting establishment of the sensing service) to the determined SF network element. In addition, for specific descriptions of the first information, the first sensing area information, the third sensing area information, the address information of the AF network element, the start time of the sensing service, and the information for requesting establishment of the sensing service, refer to the foregoing related descriptions. Details are not described again.

Optionally, that the NEF network element determines the SF network element includes: The NEF network element determines the SF network element based on the first sensing area information. The following describes a manner in which the NEF network element determines the SF network element based on the first sensing area information, as shown in optional Implementation 1.1 and Implementation 1.2 below.

Implementation 1.1: That the NEF network element determines the SF network element based on the first sensing area information includes: The NEF network element sends the first sensing area information to a third network element (for example, an NRF network element); the third network element selects M SF network elements based on the first sensing area information and NF description information corresponding to each of N SF network elements; the third network element sends information about the M SF network elements to the NEF network element; and the NEF network element selects one SF network element from the M SF network elements. N is a positive integer, and M is a positive integer less than or equal to N.

The NF description information (NF profile) corresponding to each of the N SF network elements includes area information corresponding to the SF network element, and the area information corresponding to each SF network element indicates an area corresponding to the SF network element. An area corresponding to each of the M SF network elements matches an area indicated by the first sensing area information. In addition, in an embodiment of this application, the area corresponding to the SF network element may also be understood as an area covered by the SF network element, or a service area (service area) of the SF network element, or a set of areas (for example, a TA or a cell ID) corresponding to all access network devices that can be connected to the SF network element. That the area corresponding to the SF network element matches the area indicated by the first sensing area information may also be understood as: The area covered by the SF network element includes the area indicated by the first sensing area information, or the service area of the SF network element includes the area indicated by the first sensing area information.

In addition, when the third network element selects the M SF network elements, or when the NEF network element selects one SF network element from the M SF network elements, the selection may be performed with reference to other information. For example, the selection may be performed in consideration of load balancing among the SF network elements. This is not limited.

For example, the third network element is an NRF network element. An SF network element #1 corresponds to an area #1, an area #2, and an area #3. An SF network element #2 corresponds to the area #1 and an area #4. An SF network element #3 corresponds to the area #2 and the area #4. An area indicated by the first sensing area information is the area #1. In this case, both the areas corresponding to the SF network element #1 and the areas corresponding to the SF network element #2 include the area #1, and the area #1 matches the area indicated by the first sensing area information.

The NRF network element selects the SF network element #1 and the SF network element #2 from the SF network element #1, the SF network element #2, and the SF network element #3, and sends information about the SF network element #1 and information about the SF network element #2 to the NEF network element. The NEF network element determines the SF network element #1 and the SF network element #2 based on the information about the SF network element #1 and the information about the SF network element #2. The NEF network element selects one SF network element from the SF network element #1 and the SF network element #2 based on load balancing or another factor.

Alternatively, the NRF network element determines the SF network element #1 and the SF network element #2 from the SF network element #1, the SF network element #2, and the SF network element #3, and then selects the SF network element #1 from the SF network element #1 and the SF network element #2 based on load balancing or another factor. The NRF network element sends information about the SF network element #1 to the NEF network element. The NEF network element determines the SF network element #1 based on the information about the SF network element #1 sent by the NEF network element.

Optionally, the information about the M SF network elements includes an NF ID or NF ID candidate list (NF ID candidate list) corresponding to each of the M SF network elements, and area information or NF description information corresponding to each SF network element. The NF ID may be represented by, for example, an IP address or an FQDN.

Optionally, the method further includes: The NEF network element sends, to the third network element, information indicating that a to-be-determined network element type is an SF network element. In this case, the third network element can learn that a type of a network element that needs to be selected is an SF network element. In addition, the to-be-determined network element type may also be understood as a to-be-selected network element type or a to-be-discovered network element type.

Implementation 1.2: That the NEF network element determines the SF network element based on the first sensing area information includes: The NEF network element determines the SF network element based on the first sensing area information and local configuration information.

The local configuration information includes NF description information that corresponds to each of at least one SF network element and that is locally configured by the NEF network element, the NF description information corresponding to each SF network element includes area information corresponding to the SF network element, and the area information corresponding to each SF network element indicates an area corresponding to the SF network element. An area corresponding to the SF network element determined by the NEF network element matches an area indicated by the first description information.

In addition, optionally, instead of the first sensing area information and the local configuration information, the NEF network element may further determine the SF network element based on/with reference to other information. This is not limited. For example, the NEF network element determines the SF network element based on the first sensing area information, the local configuration information, and identification information of the AF network element.

S102: The SF network element sends second information and third information to the access network device, where the second information and the third information are determined based on the first information, the second information indicates a QoS requirement for the sensing service, and the third information indicates a QoS requirement for transmitting sensing data corresponding to the sensing service. Correspondingly, the access network device receives the second information and the third information from the SF network element.

In addition, a name of the "QoS requirement" is not limited in embodiments of this application, and another name may be used. For example, the "QoS requirement" may be replaced with "requirement" or "requirement". This is not limited herein. For example, "the second information indicates a QoS requirement for the sensing service" may be replaced with "the second information indicates a requirement for the sensing service" or "the second information indicates a requirement for the sensing service". In another example, "the third information indicates a QoS requirement for transmitting sensing data corresponding to the sensing service" may be replaced with "the third information indicates a requirement for transmitting sensing data corresponding to the sensing service" or "the third information indicates a requirement for transmitting sensing data corresponding to the sensing service".

In an optional implementation, the second information includes one or more of the following: positioning accuracy information corresponding to sensing and collection, speed measurement accuracy information, sensing resolution information, a refresh rate of the sensing service, a miss detection rate, a false alarm rate, a transmission period of the sensing data, or transmission time of the sensing data.

For example, the positioning accuracy information is formed by horizontal component accuracy and/or vertical component accuracy, and the accuracy is, for example, in units of meters (meter, m). The speed measurement accuracy information is formed by a horizontal speed component and/or a vertical speed component, and the speed component is, for example, in units of meters per second (meter per second, m/s). The sensing resolution information includes one or more of the following: distance resolution (for example, in units of meters), speed resolution (for example, in units of meters per second), or angular resolution (for example, in units of angles). The refresh rate of the sensing service is, for example, in units of seconds (second, s). The miss detection rate indicates a ratio of missed detection events to all events in a process of obtaining a sensing result. For example, the miss detection rate may be expressed as a percentage. The false alarm rate indicates a ratio of false alarm events to all events in a process of obtaining a sensing result. For example, the false alarm rate may be expressed as a percentage. The transmission period of the sensing data indicates a period of periodic transmission of the sensing data. For example, the transmission period of the sensing data may be expressed using enumerated values (for example, 120 ms, 240 ms, ...). The transmission time of the sensing data indicates time for single transmission of the sensing data or time for triggered transmission of the sensing data. Optionally, compared with the first information, the second information indicates a more specific requirement for the sensing service.

Moreover, in addition to the mentioned content, the second information may further include other information. This is not limited. For example, the second information may further include a requirement for time elapsed from triggering the sensing service until a sensing result is available, and a requirement for frequency of transmitting the sensing data. The requirement for the frequency of transmitting the sensing data is, for example, a requirement for single transmission of the sensing data, or a requirement for periodic transmission of the sensing data, or a requirement for triggered transmission of the sensing data.

In addition, in an embodiment of this application, some information mentioned above may be some of the second information, or may be information in parallel with the second information. For example, in a manner, the second information includes the transmission period of the sensing data and/or the transmission time of the sensing data; and in another manner, the transmission period of the sensing data and/or the transmission time of the sensing data are/is information in parallel with the second information, and the second information does not include the transmission period of the sensing data and/or the transmission time of the sensing data.

In an optional implementation, the method further includes: The SF network element determines the second information based on the first information. For example, the SF network element may internally determine the second information based on the first information. Alternatively, the SF network element may perform, based on a local policy, the determination of the second information based on the first information. Alternatively, the SF network element may perform, based on a policy configured by an operator, the determination of the second information based on the first information. Alternatively, the SF network element may perform, based on other policy information (for example, a policy obtained in another manner), the determination of the second information based on the first information. This is not limited.

In an optional implementation, the third information includes one or more of the following: a QoS identifier (QoS identifier) corresponding to the sensing data, an allocation and retention priority (allocation and retention priority, ARP), a guaranteed bit rate (guaranteed bit rate, GBR), or a maximum bit rate (maximum bit rate, MBR). The QoS identifier may be, for example, a 5G QoS identifier (5G QoS identifier, 5QI). Moreover, in addition to the mentioned content, the third information may further include another QoS requirement for transmitting the sensing data. This is not limited. The third information may also be referred to as QoS description information (QoS profile).

The following describes an example of a manner of determining the third information, as shown in optional Implementation 2.1 to Implementation 2.3 below.

Implementation 2.1: The SF network element determines the third information based on the first information. It may be understood that the SF network element may internally determine the third information based on the first information. This implementation may be applied to a case in which an SMF is used as a logical function of the SF network element.

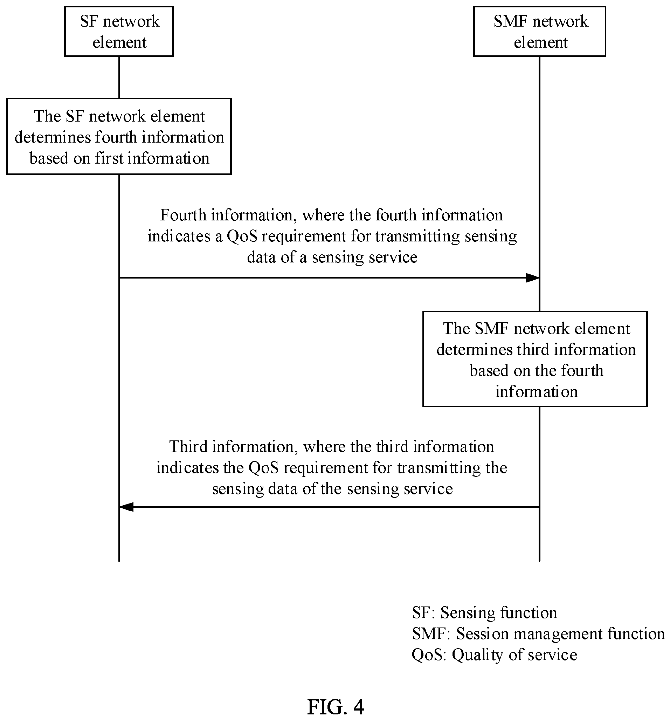

Implementation 2.2: With reference to FIG. 4, the SF network element determines fourth information based on the first information, and the SF network element sends the fourth information to an SMF network element. Correspondingly, the SMF network element receives the fourth information from the SF network element. The SMF network element determines the third information based on the fourth information, and the SMF network element sends the third information to the SF network element. Correspondingly, the SF network element receives the third information from the SMF network element. The fourth information indicates a QoS requirement for transmitting sensing data of the sensing service. In addition, in an embodiment of this application, the SMF network element may be, for example, a sensing SMF network element (namely, a sensing-SMF network element). Details are not described again below.

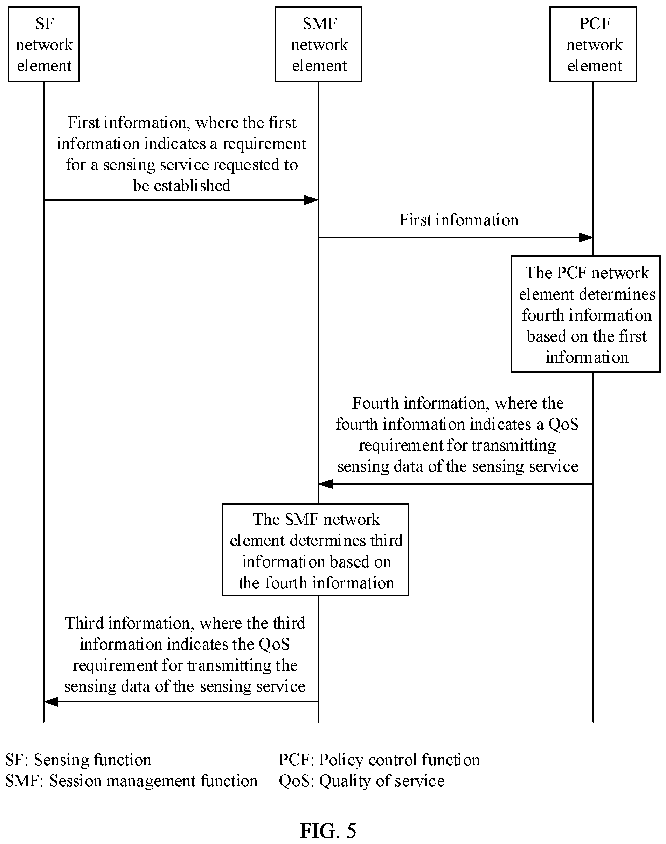

Implementation 2.3: With reference to FIG. 5, the SF network element sends the first information to the SMF network element. Correspondingly, the SMF network element receives the first information from the SF network element. The SMF network element sends the first information to a PCF network element. Correspondingly, the PCF network element receives the first information from the SMF network element. The PCF network element determines fourth information based on the first information, and sends the fourth information to the SMF network element. Correspondingly, the SMF network element receives the fourth information from the PCF network element. The SMF network element determines the third information based on the fourth information, and sends the third information to the SF network element. Correspondingly, the SF network element receives the third information from the SMF network element. The fourth information indicates a QoS requirement for transmitting sensing data of the sensing service. Therefore, in Implementation 2.3, the PCF network element with a policy control function performs the operation of determining the fourth information based on the first information, and the SF network element may not perform the operation of determining the fourth information based on the first information, helping simplify implementation logic of the SF network element.

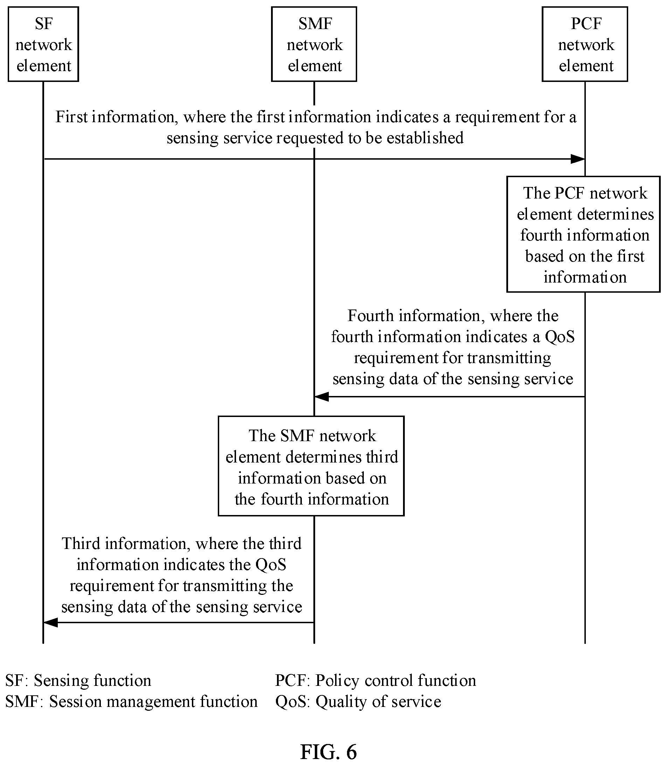

Implementation 2.4: With reference to FIG. 6, the SF network element sends the first information to the PCF network element. Correspondingly, the PCF network element receives the first information from the SF network element. The PCF network element determines fourth information based on the first information, and sends the fourth information to the SMF network element. Correspondingly, the SMF network element receives the fourth information from the PCF network element. The SMF network element determines the third information based on the fourth information, and sends the third information to the SF network element. Correspondingly, the SF network element receives the third information from the SMF network element. The fourth information indicates a QoS requirement for transmitting sensing data of the sensing service. Optionally, the SF network element may further provide identification information of the SMF network element for the PCF network element, so that the PCF network element can send the fourth information to the SMF network element based on the identification information of the SMF network element.

In addition, in Implementation 2.2 or Implementation 2.3 or Implementation 2.4, the third information may be the same as the fourth information. It may be understood that the SMF network element does not adjust the received fourth information. In this case, the SMF network element may send the third information to the SF network element, or may not send the third information to the SF network element. This is not limited.

Alternatively, the third information may be different from the fourth information. It may be understood that the SMF network element adjusts the received fourth information to obtain the third information. For example, the fourth information specifically indicates a QoS requirement corresponding to a first tunnel, and the first tunnel is configured for the access network device to send the sensing data to the SF network element through a UPF network element. The third information specifically indicates a QoS requirement corresponding to a second tunnel, and the second tunnel is configured for the access network device to send the sensing data to the UPF network element.

Optionally, in Implementation 2.2 or Implementation 2.3 or Implementation 2.4, the fourth information includes authorized QoS parameters (authorized QoS parameters). For example, the fourth information includes QoS parameters corresponding to the sensing data or QoS reference (QoS reference). The QoS parameters corresponding to the sensing data include one or more of the following: a QoS identifier (for example, 5QI) corresponding to the sensing data, an allocation and retention priority, a guaranteed bit rate, and a maximum bit rate. Optionally, the fourth information may further refer to QoS information of a PDU session. In addition, the fourth information may also be referred to as authorized QoS information for reporting the sensing data, or QoS information corresponding to a tunnel for transmitting the sensing data.

Optionally, in Implementation 2.2 or Implementation 2.3 or Implementation 2.4, the method further includes: The SF network element determines the SMF network element based on first sensing area information. This is similar to the foregoing case in which the NEF network element determines the SF network element based on the first sensing area information. For details, refer to the related descriptions of the foregoing case in which the NEF network element determines the SF network element based on the first sensing area information. Details are not described again. In addition, instead of determining the SMF network element based on the first sensing area information, the SF network element may determine the SMF network element in another manner. For example, information about the SMF network element may be configured for the SF network element in advance. This is not limited herein.

The following describes a case in which the SF network element sends the second information and the third information to the access network device, as shown in optional Implementation 3.1 and Implementation 3.2 below.

Implementation 3.1: That the SF network element sends the second information and the third information to the access network device includes: The SF network element sends the second information and the third information to an AMF network element. Correspondingly, the AMF network element receives the second information and the third information from the SF network element. The AMF network element sends the second information and the third information to the access network device. Correspondingly, the access network device receives the second information and the third information from the AMF network element.

There may be one or more AMF network elements. It may be understood that the SF network element sends the second information and the third information to one or more AMF network elements, and the one or more AMF network elements send the second information and the third information to access network devices respectively managed by the one or more AMF network elements. For example, the SF network element sends the second information and the third information to an AMF network element #1 and an AMF network element #2, the AMF network element #1 sends the second information and the third information to an access network device #1 and an access network device #2 that are managed by the AMF network element #1, and the AMF network element #2 sends the second information and the third information to an access network device #3 and an access network device #4 that are managed by the AMF network element #1.

Optionally, the method further includes: The SF network element determines the AMF network element based on first sensing area information. This is similar to the manner in which the NEF network element determines the SF network element based on the first sensing area information. For details, refer to the related descriptions of the foregoing case in which the NEF network element determines the SF network element based on the first sensing area information. Details are not described again. In addition, there may be one or more AMF network elements determined by the SF network element.

Optionally, in an embodiment of this application, the second information and the third information that are sent by the AMF network element to the access network device may be carried in a first request message sent by the AMF network element to the access network device. The first request message is for requesting the access network device to configure a parameter for sensing, and/or is for requesting the access network device to perform sensing. For example, the first request message may be a next generation application protocol (next generation application protocol, NGAP) sensing request (NGAP sensing request) message. The first request message may alternatively have another name. This is not limited.

In addition, instead of sending the second information and the third information AMF network element to the access network device through the AMF network element, the SF network element may send the second information and the third information to the access network device through one or more other intermediate network elements. This is not limited herein.

Implementation 3.2: That the SF network element sends the second information and the third information to the access network device includes: The SF network element directly sends the second information and the third information to the access network device. For example, an external interface of the SF network element is directly connected to an external interface of the access network device. The SF network element directly sends the second information and the third information to the access network device, instead of sending the second information and the third information to the access network device through an intermediate network element. Optionally, the method further includes: The SF network element selects the access network device.

In addition, in an embodiment of this application, the second information and the third information that are sent by the SF network element to the access network device may be two independent information elements (information element, IE), or may be one information element. For example, an information element that carries the second information is further configured to carry the third information, or an information element that carries the third information is further configured to carry the second information element.

In an optional implementation, the method further includes: The SF network element sends fifth information to the access network device, where the fifth information indicates a transmission mode of the sensing data, and the fifth information is determined based on the first information; and the transmission mode of the sensing data includes sending the sensing data via a control plane or a user plane. For example, that the sensing data is sent via the control plane may be understood as: The access network device sends the sensing data to the SF network element through the AMF network element and the SMF network element. That the sensing data is sent via the user plane may be understood as: The access network device sends the sensing data to the SF network element through the UPF network element.

Optionally, the method further includes: The SF network element determines the fifth information based on the first information. Optionally, the SF network element determines the fifth information based on the information related to the sensing data in the first information, and the information related to the sensing data indicates a requirement for a type of the transmitted sensing data. For details, refer to the foregoing related descriptions. Details are not described again.

For example, if the sensing data has a large data volume, the sensing data may be preferentially sent via the user plane, to improve transmission efficiency. For example, if the information related to the sensing data is for requesting reporting of point cloud information, and the point cloud information typically has a large data volume, the sensing data may be preferentially sent via the user plane. In another example, the information related to the sensing data is specifically for requesting reporting of a rendered 3D map, and the rendered 3D map typically has a large data volume, the sensing data may be preferentially sent via the user plane.

For example, if the sensing data has a small data volume, the sensing data may be preferentially sent via the control plane, to improve transmission reliability. For example, if the information related to the sensing data is specifically for requesting a description of whether there is an intruder in a given sensing area, typically with a small data volume, the sensing data may be preferentially sent via the control plane.

In addition, it should be noted that a manner of determining the transmission mode of the sensing data is not limited in embodiments of this application. For example, the transmission mode of the sensing data may alternatively be determined based on a type of the sensing service in the first information, or the transmission mode of the sensing data may be set by default to including sending the sensing data via the user plane, or the transmission mode of the sensing data may be predefined.

Moreover, the SF network element may directly send the fifth information to the access network device, or may indirectly send the fifth information to the access network device through one or more intermediate network elements (for example, an AMF network element). This is not limited. This is similar to the case in which the SF network element sends the second information and the third information to the access network device. For details, refer to the foregoing related descriptions. Details are not described again.

In an optional implementation, the method further includes: The SF network element sends, to the access network device, one or more of the following: second sensing area information, sixth information, seventh information, or start time of the sensing service. The sixth information indicates an address of a next-hop node to which the access network device sends the sensing data; and the seventh information indicates an identity (ID) of a third tunnel, and the third tunnel is configured for the access network device to send the sensing data to the SF network element. The identity of the third tunnel may also be referred to as an uplink tunnel ID (UL tunnel ID).

Optionally, the second sensing area information is the same as the first sensing area information, or the second sensing area information is a subset of the first sensing area information. For specific descriptions of the first sensing area information, refer to the foregoing related descriptions. Details are not described again. It may be understood that an area indicated by the second sensing area information is the same as an area indicated by the first sensing area information, or an area indicated by the second sensing area information is a part of an area indicated by the first sensing area information. For example, the SF network element sends the second sensing area information to the access network device through the AMF network element, where the second sensing area information is the same as the first area, or an area indicated by the second sensing area is an area that is in an area indicated by the first sensing area information and that matches a service area of the AMF network element.

In an optional manner, the address, as indicated by the sixth information, of the next-hop node to which the access network device sends the sensing data is an address of the UPF network element, and the third tunnel is specifically configured for the access network device to send the sensing data to the SF network element through the UPF network element. This manner may be applied to a case in which the UPF network element and the SF network element are two independent network elements.

In another optional manner, the address, as indicated by the sixth information, of the next-hop node to which the access network device sends the sensing data is an address of the SF network element, and the third tunnel is configured for the access network device to directly send the sensing data to the SF network element. This manner may be applied to a case in which the UPF is a logical function in the SF network element.

Optionally, the sixth information and/or the seventh information are/is sent by the SMF network element to the SF network element.

In addition, the SF network element may directly send or may indirectly send through one or more intermediate network elements (for example, an AMF network element), to the access network device, one or more of the following: the second sensing area information, the sixth information, the seventh information, or the start time of the sensing service. This is not limited. This is similar to the case in which the SF network element sends the second information and the third information to the access network device. For details, refer to the foregoing related descriptions. Details are not described again.

In an optional implementation, the method further includes: The SF network element sends, to the SMF network element, information for requesting the SMF network element to establish context corresponding to the sensing service. The SMF network element sends configuration information to the UPF network element, where the configuration information is for configuring a rule used by the UPF network element to transmit the sensing data. The UPF network element configures a corresponding rule based on the configuration information. Optionally, the method further includes: The UPF network element sends, to the SMF network element, a response message indicating that the configuration by the UPF network element is completed, where the response message is a response message corresponding to the configuration information.

The information for requesting the SMF network element to establish the context corresponding to the sensing service may be, for example, a sensing context establishment request (Nsmf_SensingContextCreate Request) message.

The configuration information includes one or more of the following: a packet detection rule (packet detection rule, PDR), a forwarding action rule (forwarding action rule, FAR), and a QoS enforcement rule (QoS enforcement rule, QER). Optionally, the configuration information is determined based on fourth information, and the fourth information indicates a QoS requirement for transmitting the sensing data of the sensing service. For specific descriptions of the fourth information, refer to the foregoing related descriptions. Details are not described again. In addition, optionally, the configuration information sent by the SMF network element to the UPF network element may be carried in an N4x establishment request message or an N4x modification request message sent by the SMF network element to the UPF network element.

Optionally, the information for requesting the SMF network element to establish the context corresponding to the sensing service further carries the fourth information and/or eighth information, where the eighth information indicates an address of a next-hop node to which the UPF network element sends the sensing data. The next-hop node to which the UPF network element transmits the sensing data is, for example, an SF network element or an AF network element.

Optionally, after receiving the information for requesting the SMF network element to establish the context corresponding to the sensing service, the SMF network element further determines the third information based on the fourth information, and sends the third information to the SF network element. For example, the third information may be carried in a response message sent by the SMF network element to the SF network element, and the response message is a response message corresponding to the information for requesting the SMF network element to establish the context corresponding to the sensing service. For specific descriptions of this manner, refer to the foregoing related descriptions of Implementation 2.2. Details are not described again.

Optionally, after receiving the information for requesting the SMF network element to establish the context corresponding to the sensing service, the SMF network element further determines the sixth information and/or the seventh information, and sends the sixth information and/or the seventh information to the SF network element. The sixth information indicates an address of a next-hop node to which the access network device sends the sensing data; and the seventh information indicates an identity of a third tunnel, and the third tunnel is configured for the access network device to send the sensing data to the SF network element. The address of the next-hop node to which the access network device sends the sensing data and/or the identity of the third tunnel may be allocated by the SMF network element, or may be allocated by the UPF network element and sent to the SMF network element (for example, carried in a response message, as sent by the UPF network element to the SMF network element, indicating that the configuration by the UPF network element is completed). In addition, the sixth information and/or the seventh information sent by the SMF network element to the SF network element may be, for example, carried in a response message sent by the SMF network element to the SF network element. For specific descriptions of the sixth information and the seventh information, refer to the foregoing related descriptions. Details are not described again.

In addition, in a possible implementation, if the network has established in advance a resource for transmitting the sensing data, after obtaining information for requesting establishment of the sensing service, the network may not need to establish again the resource for transmitting the sensing data. For example, the network has established in advance an uplink transmission tunnel for the sensing data (for example, by default, all sensing services share a same tunnel for transmitting sensing data). After obtaining information for requesting establishment of the sensing service, the network may not need to establish again the uplink transmission tunnel for the sensing data. Specifically, the SF network element may not perform the operation of sending, to the SMF network element, the information for requesting the SMF network element to establish the context corresponding to the sensing service, the SMF network element may not perform the operation of sending the configuration information to the UPF network element, and the UPF network element may not perform the operation of configuring the corresponding rule based on the configuration information.

In an optional implementation, the method further includes one or more of the following: The access network device configures a parameter for sensing, the access network device enables a sensing service, or the access network device configures context information for transmitting sensing data. These operations may be determined by the access network device based on one or more of the following: the second information, the third information, the fifth information, the second sensing area information, the sixth information, the seventh information, or the start time of the sensing service, as received by the access network device.

For example, the access network device configures, based on the second information, the parameter for sensing.

In another example, the access network device enables the sensing service based on the start time of the sensing service.

In another example, after receiving a first request message, the access network device may enable the sensing service. The first request message is for requesting the access network device to configure the parameter for sensing, and/or is for requesting the access network device to perform sensing. This manner may be applied to a scenario in which the access network device does not receive the start time of the sensing service.

In another example, that the access network device configures the context information for transmitting the sensing data includes: The access network device allocates a resource for uplink transmission.

In an optional implementation, the method further includes: The access network device sends ninth information and/or tenth information to the SF network element. Correspondingly, the SF network element receives the ninth information and/or the tenth information from the access network device. The ninth information indicates a QoS requirement accepted by the access network device in the QoS requirement for the sensing service. The tenth information indicates a QoS requirement accepted by the access network device in the QoS requirement for transmitting the sensing data corresponding to the sensing service.

In addition, the access network device may directly send the information to the SF network element, or may send the information to the SF network element through an AMF network element. This is not limited. This is similar to the case in which the access network device sends the second information and the third information to the SF network element. For details, refer to the foregoing related descriptions. Details are not described again.

Optionally, the ninth information and/or the tenth information sent by the access network device to the SF network element are/is carried in an NGAP sensing response (NGAP sensing response) message sent by the access network device to the SF network element.

Optionally, the method further includes: The SF network element sends the tenth information to the SMF network element; and the SMF network element sends a tenth message to the UPF network element. This manner may be applied to a scenario in which some QoS requirements in QoS requirements for transmitting the sensing data corresponding to the sensing service are accepted by the access network device. The tenth information sent by the SF network element to the SMF network element may be, for example, carried in a sensing modification message sent by the SF network element to the SMF network element. The tenth message sent by the SMF network element to the UPF network element may be, for example, carried in an N4x modification request message sent by the SMF network element to the UPF network element.

In conclusion, in the information transmission method 100, the SF network element obtains first information, where the first information indicates a requirement for a sensing service requested to be established. The SF network element sends second information and third information to the access network device, where the second information and the third information are determined based on the first information, the second information indicates a QoS requirement for the sensing service, and the third information indicates a QoS requirement for transmitting sensing data corresponding to the sensing service.

Therefore, according to the method, the QoS requirement for the sensing service and the QoS requirement for transmitting the sensing data are determined based on the requirement for the sensing service requested to be established, and the QoS requirement for the sensing service and the QoS requirement for transmitting the sensing data are sent to the access network device. This helps the access network device perform sensing and transmit the sensing data based on the QoS requirement for the sensing service and the QoS requirement for transmitting the sensing data. It may be understood that the SF network element controls the access network device to perform sensing and transmit the sensing data based on the QoS requirement for the sensing service and the QoS requirement for transmitting the sensing data, so that the access network device performing sensing and transmitting the sensing data can meet the requirement for the sensing service. In this way, according to the method, the sensing service can be established, improving sensing performance.

In addition, the information transmission method 100 may be applied to a scenario in which the access network device performs station-side sensing, and may be specifically applied to a scenario in which the access network device sends and receives sensing signals by itself (to be specific, the access network device sends a sensing signal and receives a reflected signal of the sensing signal). The access network device may perform station-side sensing and report sensing data based on the second information and the third information.

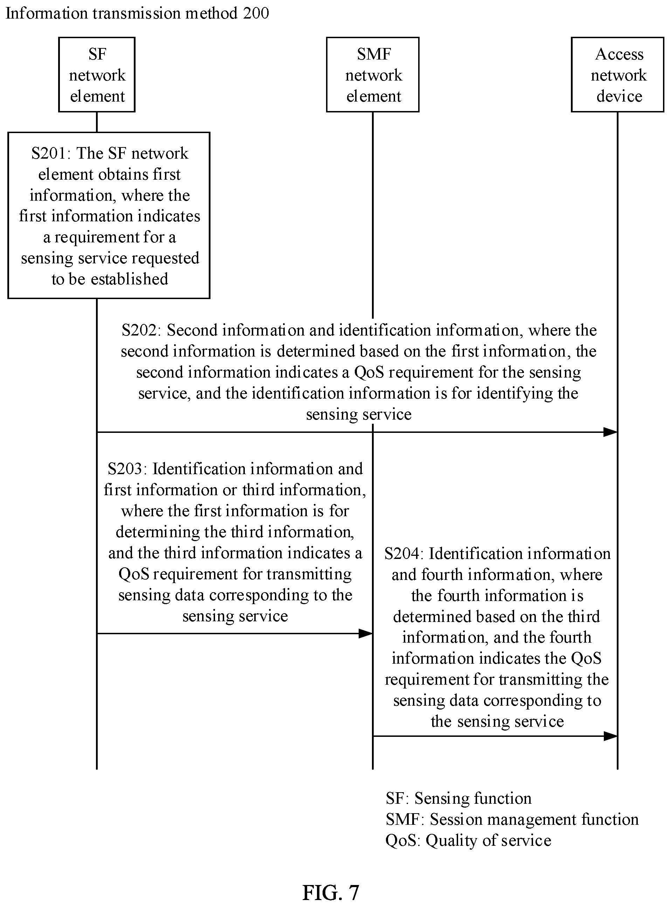

FIG. 7 is a schematic flowchart of an information transmission method 200 according to an embodiment of this application. The information transmission method 200 includes the following steps.

S201: The SF network element obtains first information, where the first information indicates a requirement for a sensing service requested to be established.

For specific descriptions of S201, refer to related descriptions of step S101 (including all content between step S101 and step S102) in the information transmission method 100. Details are not described again.

S202: The SF network element sends second information and identification information to the access network device, where the second information is determined based on the first information, the second information indicates a QoS requirement for the sensing service, and the identification information is for identifying the sensing service. Correspondingly, the access network device receives the second information and the identification information from the SF network element.

The identification information is, for example, a sensing ID (sensing ID), and the sensing ID may indicate a specific sensing service (internal to an operator). For example, a numbering rule for the sensing ID combines an operator identity and a sensing service identity, where the "sensing service identity" may also be understood as a "sensing service identity". For example, the sensing ID may be represented as [operator identity][sensing service identity], where each field may be represented by a binary number, an octal number, a decimal number, or a hexadecimal number.

In an optional implementation, the method further includes: The SF network element determines the identification information. It may be understood that the SF network element may generate the identification information of the sensing service. In a possible implementation method, an operator pre-configures a range of a sensing service identity that can be allocated by the SF network element. After the SF network element obtains the first information or information for requesting establishment of the sensing service, the SF network element allocates an unallocated sensing service identity as the identification information of the sensing service.

For example, a binary number is used to represent the sensing service identity. An operator pre-configures a range of the sensing service identity that can be allocated by an SF network element #1, where the range is 000 to 111 (binary). From 000 to 111, unallocated sensing service identities are 100 to 111. Then, after the SF network element #1 obtains first information #1 (the first information #1 indicates a requirement for a sensing service #1) or information for requesting establishment of the sensing service #1, the SF network element #1 may select one sensing service identity from 100 to 111 as identification information of the sensing service #1. For example, the SF network element #1 selects "101" from 100 to 111 as the identification information of the sensing service #1. In addition, for specific descriptions of the second information, refer to related descriptions of the second information in the information transmission method 100. Details are not described again. For specific descriptions of the SF network element sending the second information and the identification information to the access network device, refer to related descriptions of the SF network element sending the second information to the access network device in the information transmission method 100. Details are not described again.

S203: The SF network element sends the identification information and the first information or third information to the SMF network element, where the first information is for determining the third information, and the third information indicates a QoS requirement for transmitting sensing data corresponding to the sensing service. Correspondingly, the SMF network element receives the identification information and the first information or the third information from the SF network element.

S204: The SMF network element sends the identification information and fourth information to the access network device, where the fourth information is determined based on the third information, and the fourth information indicates the QoS requirement for transmitting the sensing data corresponding to the sensing service. Correspondingly, the access network device receives the identification information and the fourth information from the SMF network element.

In this case, the identification information is for associating the second information with the fourth information. The access network device may associate the second information with the fourth information based on the identification information. It may be understood that the access network device can determine, based on the identification information, that the sensing service corresponding to the second information is the same as the sensing service corresponding to the fourth information.

For example, the access network device receives identification information #1 and second information #1 associated with the identification information #1 from the SF network element, and the access network device further receives identification information #2 and second information #2 associated with the identification information #2 from the SF network element. The access network device receives the identification information #1 and fourth information #1 associated with the identification information #1 from the SMF network element, and the access network device further receives the identification information #2 and fourth information #2 associated with the identification information #2 from the SMF network element. Then, the access network device may determine, based on the identification information #1, that the second information #1 and the fourth information #1 correspond to a same sensing service, and may determine, based on the identification information #2, that the second information #2 and the fourth information #2 correspond to a same sensing service.

In addition, the information transmission method 200 is similar to the information transmission method 100. For specific descriptions, refer to related descriptions of the information transmission method 100. A difference between the information transmission method 200 and the information transmission method 100 is as follows: In the information transmission method 200, the SF network element sends the second information and the identification information to the access network device, the SF network element further sends the identification information and the first information or the third information to the SMF network element, and then the SMF network element sends the identification information and the fourth information (the fourth information is determined based on the third information) to the access network device.

In an optional implementation, the third information indicates a QoS requirement corresponding to a first tunnel, and the first tunnel is configured for the access network device to send the sensing data to the SF network element through a UPF network element; and the fourth information specifically indicates a QoS requirement corresponding to a second tunnel, and the second tunnel is configured for the access network device to send the sensing data to the UPF network element.

In an optional implementation, the third information in the information transmission method 200 is different from the third information in the information transmission method 100, and the third information in the information transmission method 200 is the same as the fourth information in the information transmission method 100. For specific descriptions of the third information in the information transmission method 200, refer to specific descriptions of the fourth information in the information transmission method 100. Details are not described again.

In an optional implementation, the fourth information in the information transmission method 200 is different from the fourth information in the information transmission method 100, and the fourth information in the information transmission method 200 is the same as the third information in the information transmission method 100. For specific descriptions of the fourth information in the information transmission method 200, refer to specific descriptions of the third information in the information transmission method 100. Details are not described again.

In an optional implementation, the difference between the information transmission method 200 and the information transmission method 100 further includes: In the information transmission method 200, the SMF network element sends sixth information and/or seventh information to the access network device, where the sixth information indicates an address of a next-hop node to which the access network device sends the sensing data; and the seventh information indicates an identity of a third tunnel, and the third tunnel is configured for the access network device to send the sensing data to the SF network element.

In addition, the information transmission method 200 may further include the implementations in the information transmission method 100. For specific descriptions, refer to related descriptions in the information transmission method 100. Details are not described again.

In conclusion, in the information transmission method 200, the SF network element sends the identification information and the first information or the third information to the SMF network element, helping the SMF network element send, to the access network device, the identification information and the QoS requirement for transmitting the sensing data. The SF network element further sends the QoS requirement for the sensing service and the identification information to the access network device, helping the access network device associate, based on the identification information, the QoS requirement for the sensing service, as sent by the SF network element, with the QoS requirement for transmitting the sensing data, as sent by the SMF network element. Therefore, the access network device can perform sensing and transmit the sensing data based on the QoS requirement for the sensing service and the QoS requirement for transmitting the sensing data, so that the access network device performing sensing and transmitting the sensing data can meet the requirement for the sensing service. In this way, according to the method, the sensing service can be established, improving sensing performance.

In addition, in the information transmission method 200, the QoS requirement for the sensing service is sent by the SF network element with a sensing function to the access network device, and the QoS requirement for transmitting the sensing data is sent by the SMF network element with a session management function to the access network device. The QoS requirement for the sensing service and the QoS requirement for transmitting the sensing data are separately transmitted to the access network device, making logical division clearer.

In addition, the information transmission method 200 may be applied to a scenario in which the access network device performs station-side sensing, and may be specifically applied to a scenario in which the access network device sends and receives sensing signals by itself (to be specific, the access network device sends a sensing signal and receives a reflected signal of the sensing signal). The access network device may perform station-side sensing and report sensing data based on the second information and the fourth information.

The following describes examples of the information transmission method provided in embodiments of this application, such as information transmission methods described in Example 1 to Example 5 below.

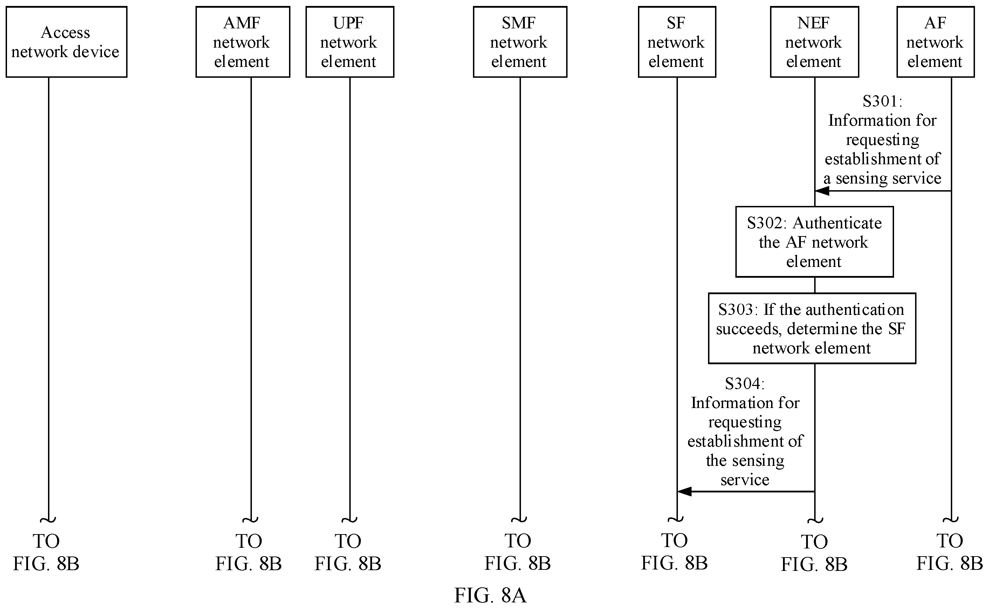

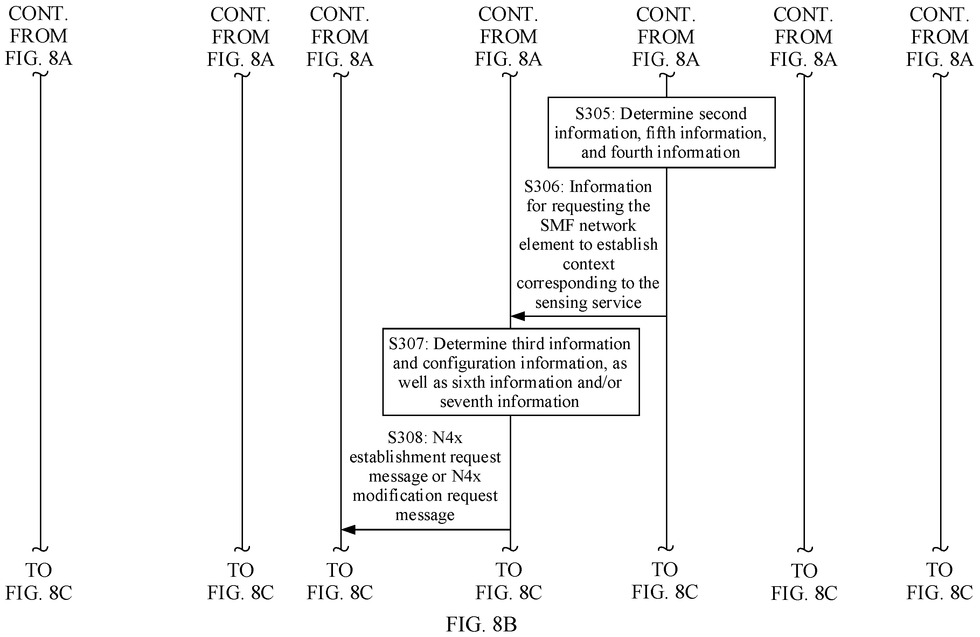

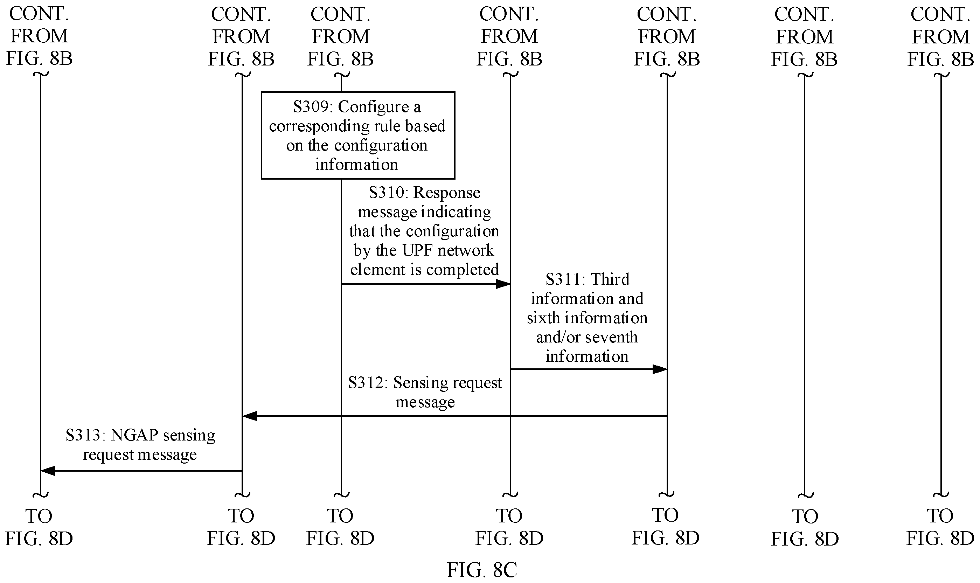

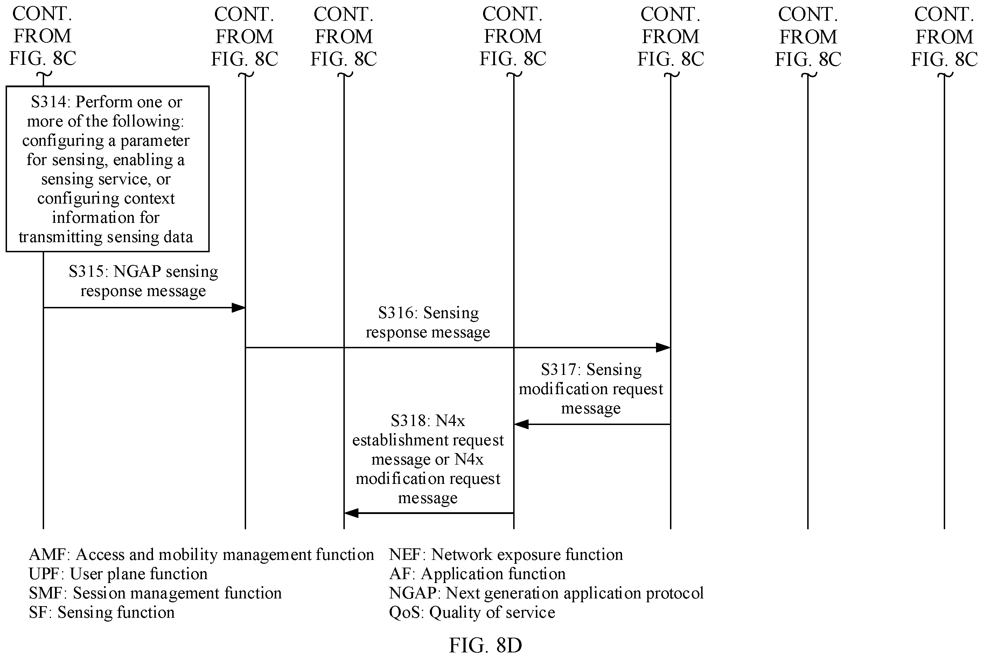

Example 1: With reference to FIG. 8A to FIG. 8D, the information transmission method in Example 1 includes the following steps.

S301: An AF network element sends, to an NEF network element, information for requesting establishment of a sensing service. Correspondingly, the NEF network element receives, from the AF network element, the information for requesting establishment of the sensing service.

The information for requesting establishment of the sensing service, as sent by the AF network element to the NEF network element, includes: first information, third sensing area information, address information of the AF network element, and start time of the sensing service. The first information indicates a requirement for the sensing service requested to be established.

S302: The NEF network element authenticates the AF network element.

S303: If the NEF network element successfully authenticates the AF network element, the NEF network element determines an SF network element.

S304: The NEF network element sends, to the SF network element, the information for requesting establishment of the sensing service. Correspondingly, the SF network element receives, from the NEF network element, the information for requesting establishment of the sensing service.

The information for requesting establishment of the sensing service, as sent by the NEF network element to the SF network element, includes: the first information, first sensing area information, the address information of the AF network element, and the start time of the sensing service. The first sensing area information is determined based on the third sensing area information.

In an optional implementation, step S301 to step S304 may be replaced with: The AF network element sends, to the SF network element, the information for requesting establishment of the sensing service. Correspondingly, the SF network element receives, from the AF network element, the information for requesting establishment of the sensing service. The information for requesting establishment of the sensing service, as sent by the AF network element to the SF network element, includes: the first information, the first sensing area information, the address information of the AF network element, and the start time of the sensing service. This implementation may be applied to a scenario in which the AF network element is located within a trust domain of a network. In addition, this implementation is applicable to Example 1, and is also applicable to subsequent Example 2 to Example 5. Details are not described again below.

S305: The SF network element determines second information, fifth information, and fourth information.

The second information indicates a QoS requirement for the sensing service, the fifth information indicates a transmission mode of sensing data, and the fourth information indicates a QoS requirement for transmitting the sensing data of the sensing service.

S306: The SF network element sends, to an SMF network element, information for requesting the SMF network element to establish context corresponding to the sensing service. Correspondingly, the SMF network element receives, from the SF network element, the information for requesting the SMF network element to establish the context corresponding to the sensing service.

The information for requesting the SMF network element to establish the context corresponding to the sensing service includes the fourth information and eighth information, where the eighth information indicates an address of a next-hop node to which the UPF network element sends the sensing data.

S307: The SMF network element determines third information and configuration information, as well as sixth information and/or seventh information.

The third information indicates the QoS requirement for transmitting the sensing data corresponding to the sensing service, and the third information is determined based on the fourth information. The configuration information is for configuring a rule used by the UPF network element to transmit the sensing data. The sixth information indicates an address of a next-hop node to which the access network device sends the sensing data. The seventh information indicates an identity of a third tunnel, and the third tunnel is configured for the access network device to send the sensing data to the SF network element.

S308: The SMF network element sends an N4x establishment request message or an N4x modification request message to a UPF network element. Correspondingly, the UPF network element receives the N4x establishment request message or the N4x modification request message from the SMF network element.

The N4x establishment request message or the N4x modification request message includes the configuration information. Optionally, the N4x establishment request message or the N4x modification request message further includes the sixth information and/or the seventh information.

S309: The UPF network element configures a corresponding rule based on the configuration information.

S310: The UPF network element sends, to the SMF network element, a response message indicating that the configuration by the UPF network element is completed. Correspondingly, the SMF network element receives, from the UPF network element, the response message indicating that the configuration by the UPF network element is completed.

S311: The SMF network element sends the third information and the sixth information and/or the seventh information to the SF network element. Correspondingly, the SF network element receives the third information and the sixth information and/or the seventh information from the SMF network element.

S312: The SF network element sends a sensing request message to an AMF network element. Correspondingly, the AMF network element receives the sensing request message from the SF network element.

The sensing request (sensing request) message includes: the second information, the third information, the fifth information, the second sensing area information, the sixth information, the seventh information, and the start time of the sensing service.

S313: The AMF network element sends an NGAP sensing request message to an access network device. Correspondingly, the access network device receives the NGAP sensing request message from the AMF network element.

The NGAP sensing request message includes: the second information, the third information, the fifth information, the second sensing area information, the sixth information, the seventh information, and the start time of the sensing service.

S314: The access network device performs one or more of the following: configuring a parameter for sensing, enabling a sensing service, or configuring context information for transmitting sensing data.

S315: The access network device sends an NGAP sensing response message to the AMF network element. Correspondingly, the AMF network element receives the NGAP sensing response message from the access network device.

The NGAP sensing response message includes ninth information and/or tenth information. The ninth information indicates a QoS requirement accepted by the access network device in the QoS requirement for the sensing service. The tenth information indicates a QoS requirement accepted by the access network device in the QoS requirement for transmitting the sensing data corresponding to the sensing service.

S316: The AMF network element sends a sensing response message to the SF network element. Correspondingly, the SF network element receives the sensing response message from the AMF network element.

The sensing response message includes the ninth information and/or the tenth information.

S317: The SF network element sends a sensing modification request message to the SMF network element. Correspondingly, the SMF network element receives the sensing modification request message from the SF network element. The sensing modification request message includes the tenth information.

S318: The SMF network element sends an N4x establishment request message or an N4x modification request message to the UPF network element. Correspondingly, the UPF network element receives the N4x establishment request message or the N4x modification request message from the SMF network element. The N4x establishment request message or the N4x modification request message includes a tenth message.

In this case, establishment of an uplink transmission tunnel for the sensing data is completed. Subsequently, the access network device may send the sensing data to the SF network element based on QoS information for transmitting the sensing data. The SF network element may send a sensing result (for example, sensing data or a result determined based on the sensing data) to the AF network element via the NEF network element or a user plane according to a sensing method.

For specific descriptions of the information transmission method in Example 1, refer to related descriptions of the information transmission method 100. Details are not described again.

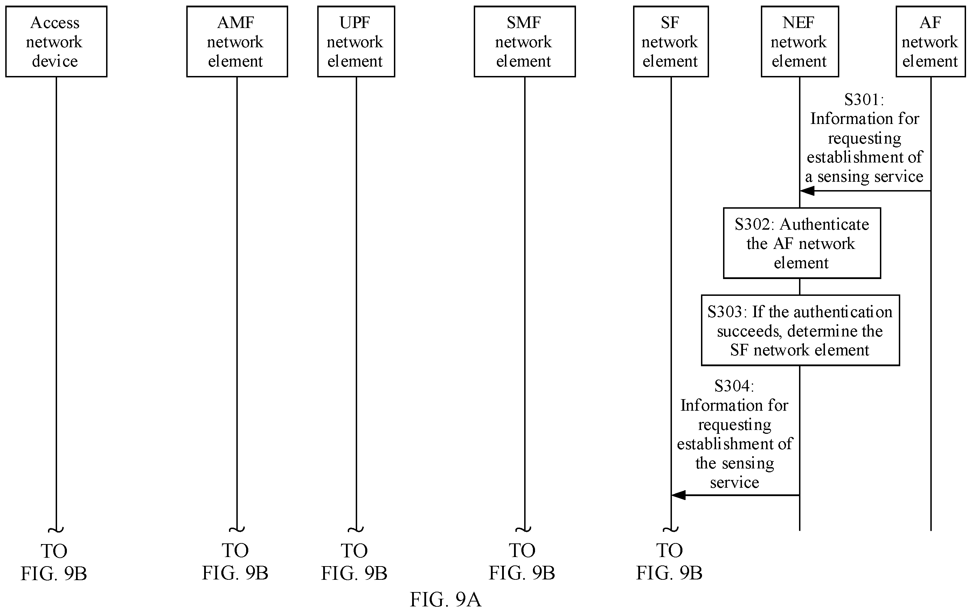

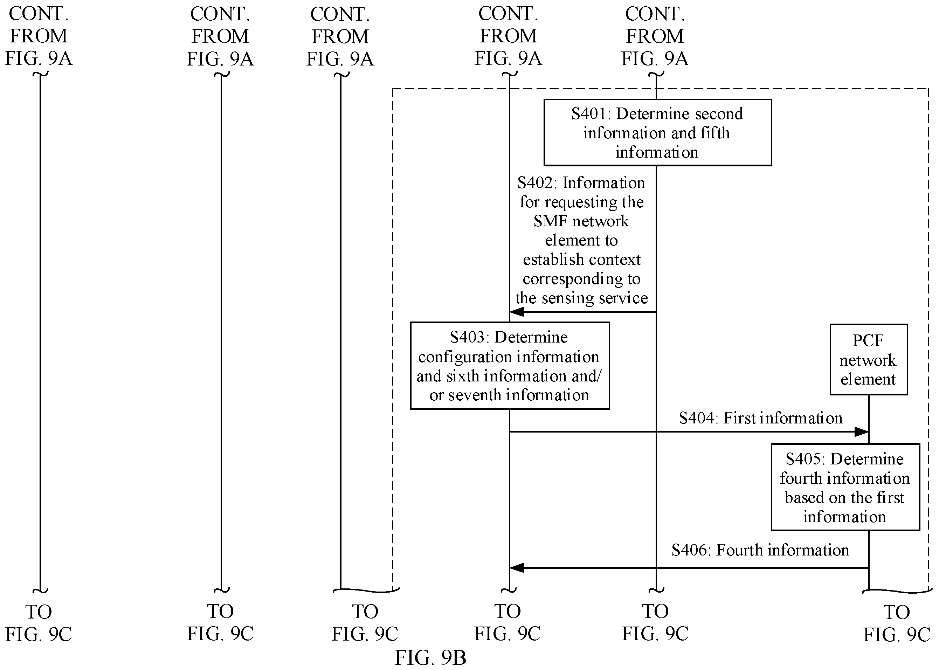

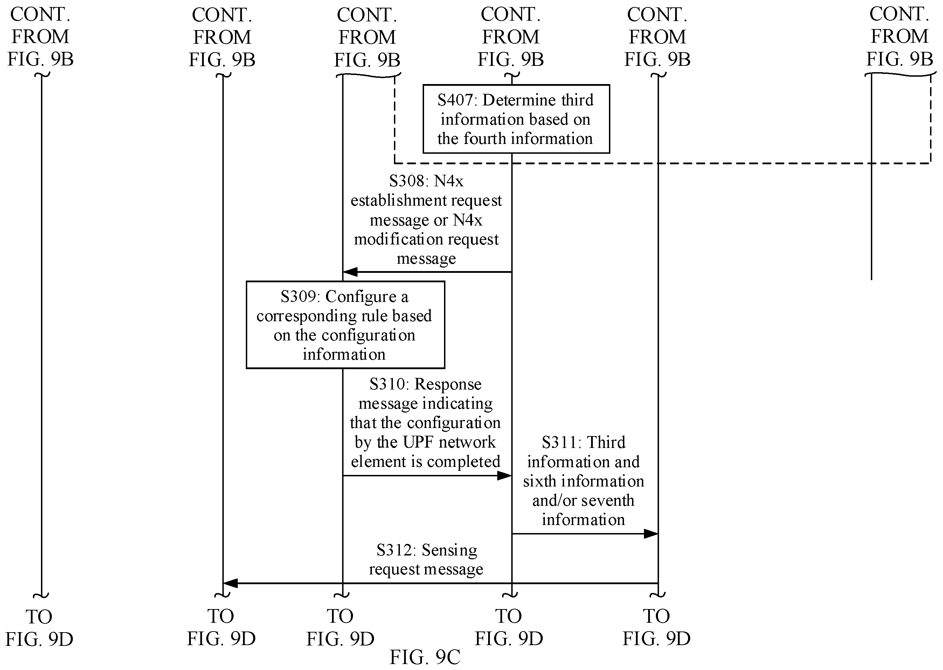

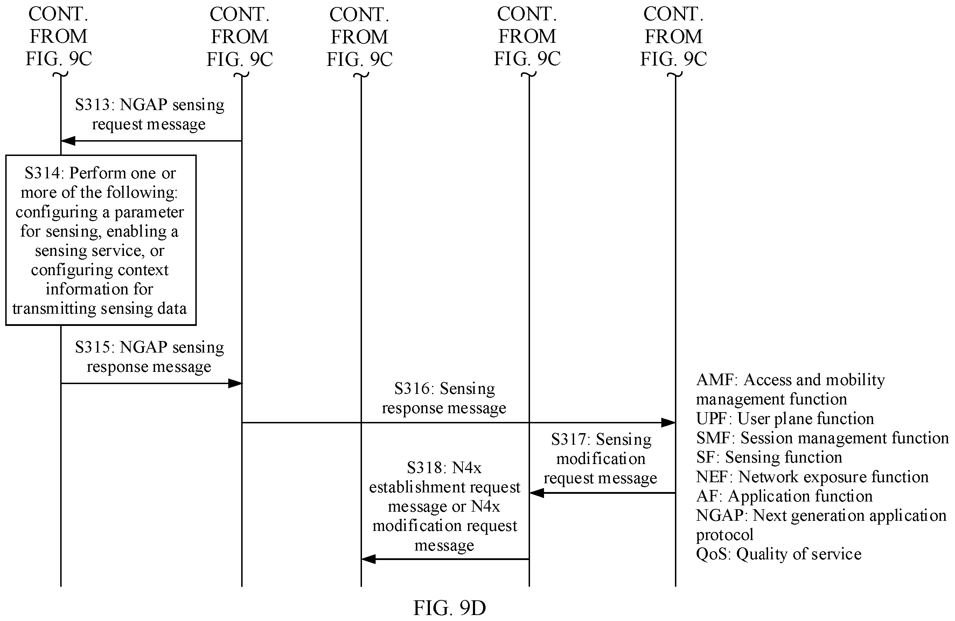

Example 2: With reference to FIG. 9A to FIG. 9D, as shown in a dashed box in FIG. 9B and FIG. 9C, a difference between the information transmission method in Example 2 and the information transmission method in Example 1 lies in that step S305 to step S307 in the information transmission method in Example 1 are replaced with step S401 to step S407, resulting in the information transmission method in Example 2.

S401: The SF network element determines second information and fifth information. The second information indicates a QoS requirement for the sensing service, and the fifth information indicates a transmission mode of sensing data.

S402: The SF network element sends, to an SMF network element, information for requesting the SMF network element to establish context corresponding to the sensing service. Correspondingly, the SMF network element receives, from the SF network element, the information for requesting the SMF network element to establish the context corresponding to the sensing service.

The information for requesting the SMF network element to establish the context corresponding to the sensing service includes first information and eighth information. The first information indicates a requirement for the sensing service requested to be established, and the eighth information indicates an address of a next-hop node to which a UPF network element sends the sensing data.

S403: The SMF network element determines configuration information and sixth information and/or seventh information.

The configuration information is for configuring a rule used by the UPF network element to transmit the sensing data; the sixth information indicates an address of a next-hop node to which the access network device sends the sensing data; and the seventh information indicates an identity of a third tunnel, and the third tunnel is configured for the access network device to send the sensing data to the SF network element.

S404: The SMF network element sends the first information to a PCF network element. Correspondingly, the PCF network element receives the first information from the SMF network element.

S405: The PCF network element determines fourth information based on the first information. The fourth information indicates a QoS requirement for transmitting sensing data of the sensing service.

S406: The PCF network element sends the fourth information to the SMF network element. Correspondingly, the SMF network element receives the fourth information from the PCF network element.

S407: The SMF network element determines third information based on the fourth information. The third information indicates a QoS requirement for transmitting the sensing data corresponding to the sensing service.

For specific descriptions of the information transmission method in Example 2, further refer to related descriptions of the information transmission method 100. Details are not described again.

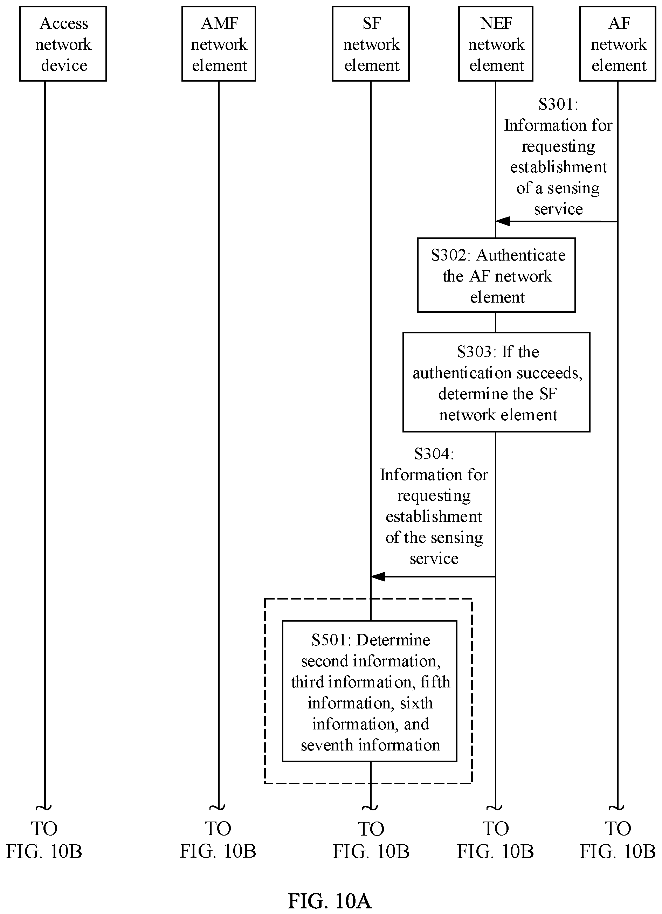

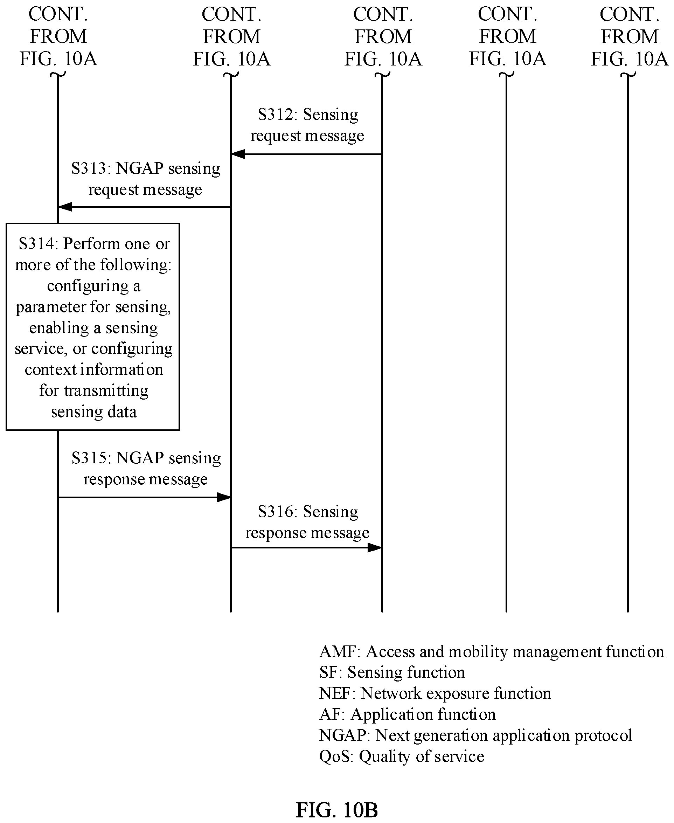

Example 3: With reference to FIG. 10A and FIG. 10B, as shown in a dashed box in FIG. 10A, a difference between the information transmission method in Example 3 and the information transmission method in Example 1 lies in that step S305 to step S311 in the information transmission method in Example 1 are replaced with step S501, resulting in the information transmission method in Example 3, and the information transmission method in Example 3 excludes step S317 and step S318 in the information transmission method in Example 1.

S501: The SF network element determines second information, third information, fifth information, sixth information, and seventh information.

The second information indicates a QoS requirement for the sensing service; the third information indicates a QoS requirement for transmitting sensing data of the sensing service; the fifth information indicates a transmission mode of the sensing data; the sixth information indicates an address of a next-hop node to which an access network device sends the sensing data; and the seventh information indicates an identity of a third tunnel, and the third tunnel is configured for the access network device to send the sensing data to the SF network element.

Correspondingly, step S312 "the SF network element sends a sensing request message to an AMF network element" in the information transmission method in Example 3 is different from step S312 in the information transmission method in Example 1. The difference is as follows: In step S312 in the information transmission method in Example 3, the sensing request message sent by the SF network element to the AMF network element includes the second information, the third information, the fifth information, second sensing area information, and start time of the sensing service, but excludes the sixth information and the seventh information.

Step S313 "the AMF network element sends an NGAP sensing request message to the access network device" in the information transmission method in Example 3 is different from step S313 in the information transmission method in Example 1. The difference is as follows: In step S313 in the information transmission method in Example 3, the NGAP sensing request message sent by the AMF network element to the access network device includes the second information, the third information, the fifth information, the second sensing area information, and the start time of the sensing service, but excludes the sixth information and the seventh information.

In addition, the information transmission method in Example 3 may be applied to a scenario in which an SMF and a UPF are used as logical functions of the SF network element, and may be applied to a case in which the access network device and the SF network element are nodelevel (with no tunnel ID).

For specific descriptions of the information transmission method in Example 3, further refer to related descriptions of the information transmission method 100. Details are not described again.

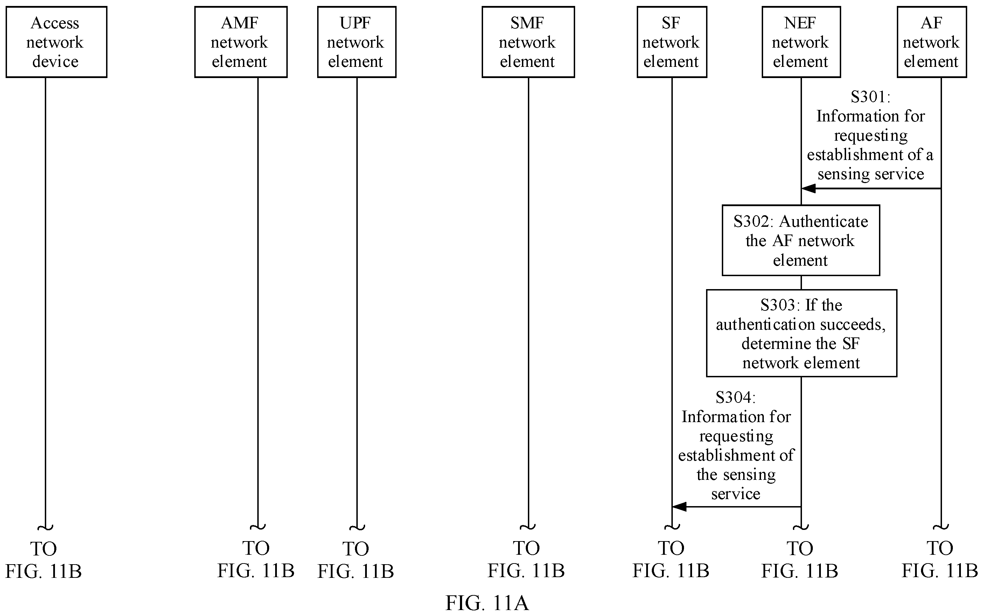

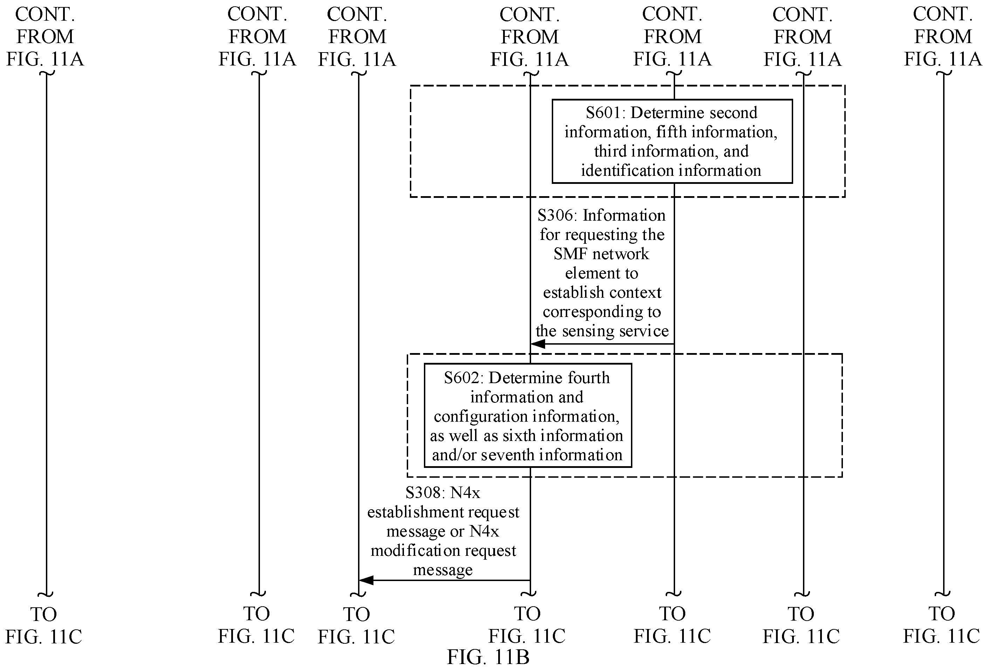

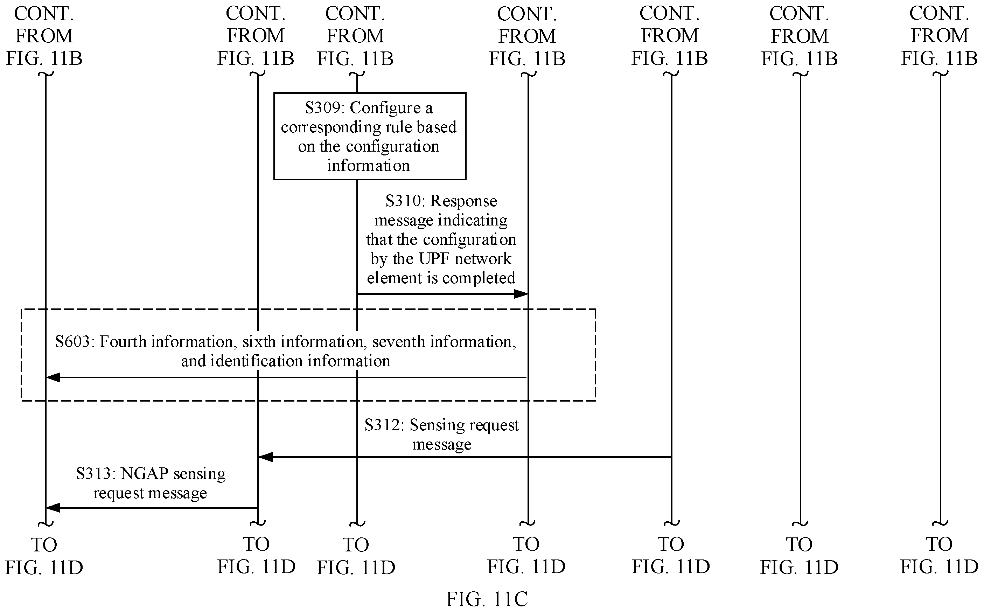

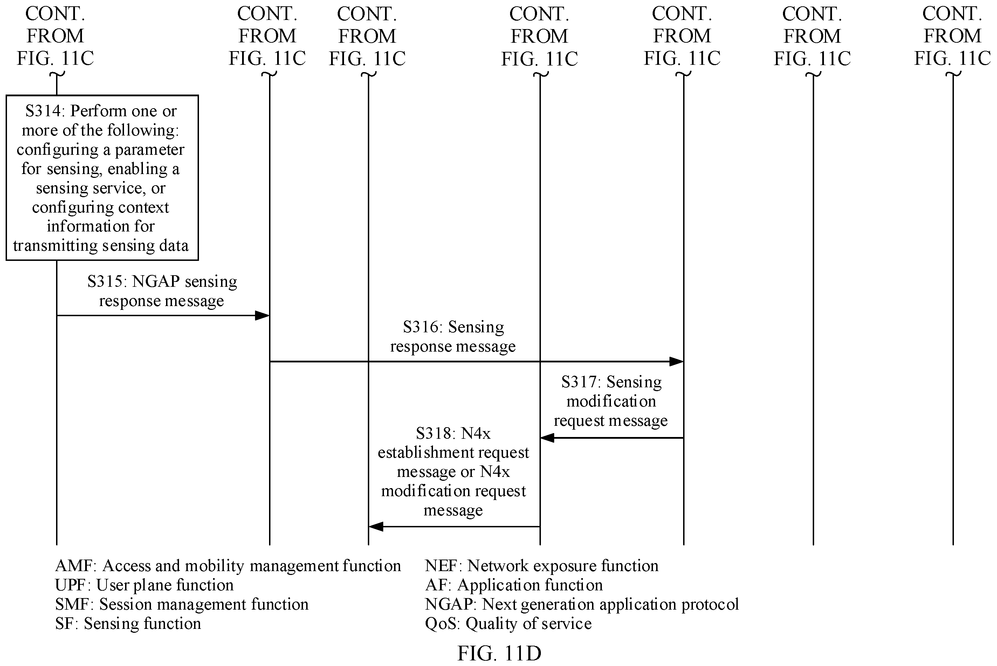

Example 4: With reference to FIG. 11A to FIG. 11D, as shown in dashed boxes in FIG. 11B and FIG. 11C, a difference between the information transmission method in Example 4 and the information transmission method in Example 1 is as follows: In the information transmission method in Example 1, step S305 is replaced with step S601, step S307 is replaced with step S602, and step S311 is replaced with step S602, resulting in the information transmission method in Example 4.

S601: The SF network element determines second information, fifth information, third information, and identification information.

The second information indicates a QoS requirement for the sensing service, the fifth information indicates a transmission mode of sensing data, the third information indicates a QoS requirement for transmitting the sensing data of the sensing service, and the identification information is for identifying the sensing service.

Correspondingly, step S306 "the SF network element sends, to an SMF network element, information for requesting the SMF network element to establish context corresponding to the sensing service" in the information transmission method in Example 4 is different from step S306 in the information transmission method in Example 1. The difference is as follows: In step S306 in the information transmission method in Example 4, the information for requesting the SMF network element to establish the context corresponding to the sensing service, as sent by the SF network element to the SMF network element, includes: the third information and eighth information, where the eighth information indicates an address of a next-hop node to which a UPF network element sends the sensing data.

S602: The SMF network element determines fourth information and configuration information, as well as sixth information and/or seventh information.

The fourth information indicates the QoS requirement for transmitting the sensing data corresponding to the sensing service, and the fourth information is determined based on the third information. The configuration information is for configuring a rule used by the UPF network element to transmit the sensing data. The sixth information indicates an address of a next-hop node to which the access network device sends the sensing data. The seventh information indicates an identity of a third tunnel, and the third tunnel is configured for the access network device to send the sensing data to the SF network element.

S603: The SMF network element sends the fourth information, the sixth information, the seventh information, and the identification information to the access network device.

Correspondingly, step S312 "the SF network element sends a sensing request message to an AMF network element" in the information transmission method in Example 4 is different from step S312 in the information transmission method in Example 1. The difference is as follows: In step S312 in the information transmission method in Example 4, the sensing request message sent by the SF network element to the AMF network element includes the second information, the fifth information, second sensing area information, start time of the sensing service, and the identification information.

For specific descriptions of the information transmission method in Example 4, further refer to related descriptions of the information transmission method 200. Details are not described again.

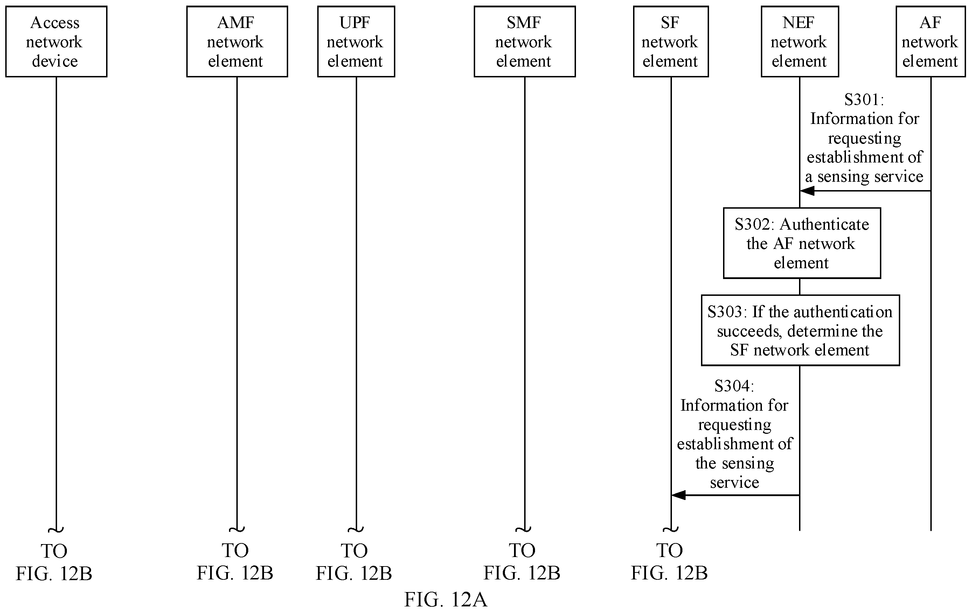

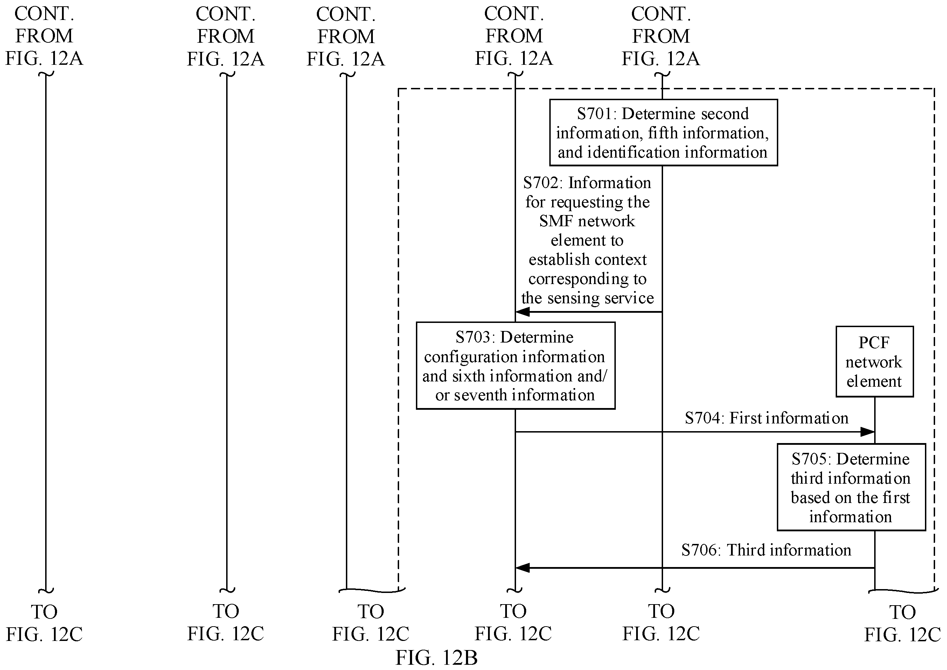

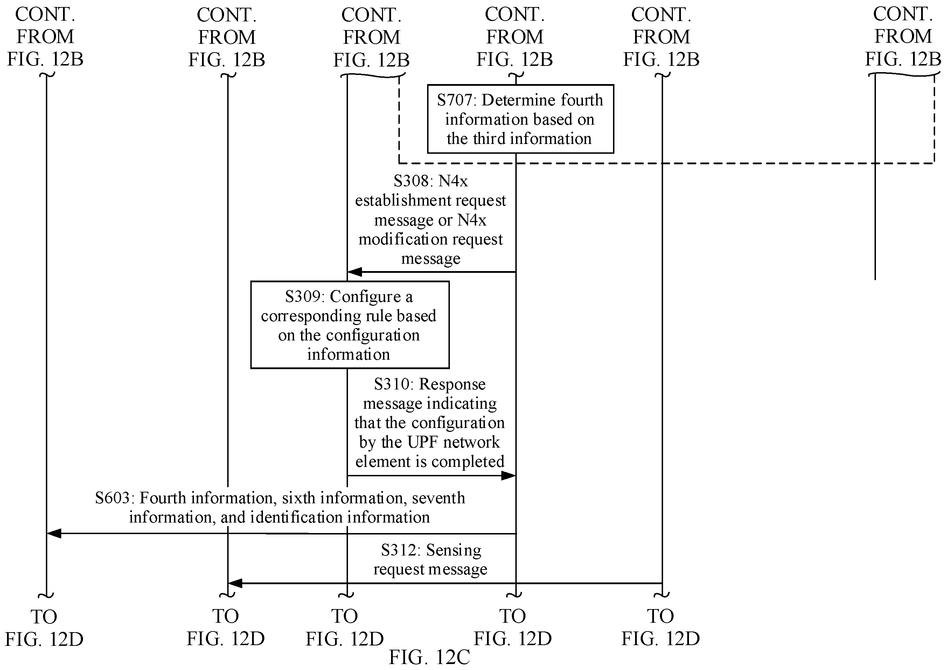

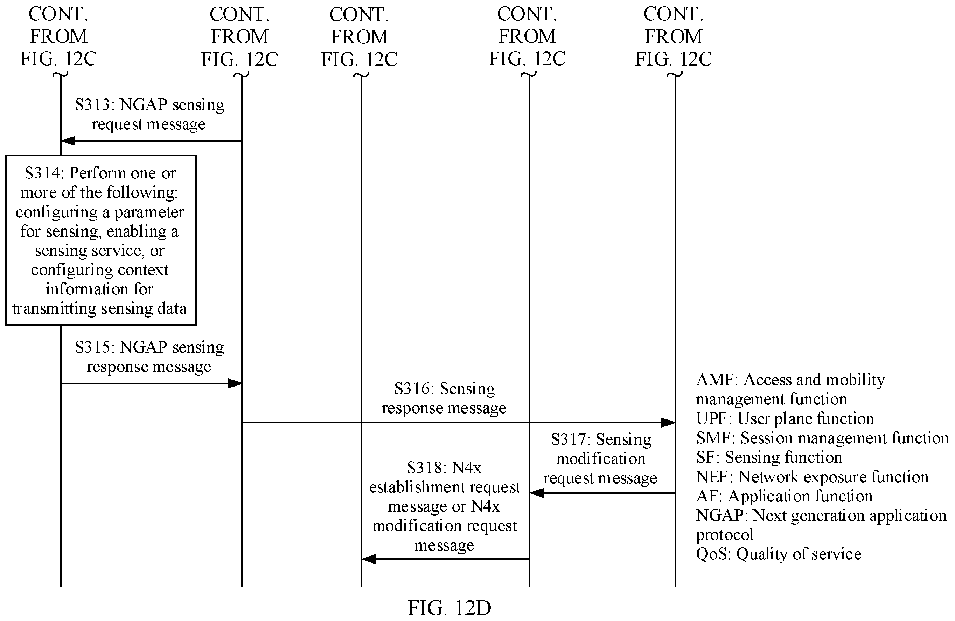

Example 5: With reference to FIG. 12A to FIG. 12D, as shown in a dashed box in FIG. 12B and FIG. 12C, a difference between the information transmission method in Example 5 and the information transmission method in Example 4 lies in that step S601, step S306, and step S602 in the information transmission method in Example 4 are replaced with step S701 to step S707, resulting in the information transmission method in Example 5.

S701: The SF network element determines second information, fifth information, and identification information. The second information indicates a QoS requirement for the sensing service, the fifth information indicates a transmission mode of sensing data, and the identification information is for identifying the sensing service.

S702: The SF network element sends, to an SMF network element, information for requesting the SMF network element to establish context corresponding to the sensing service. Correspondingly, the SMF network element receives, from the SF network element, the information for requesting the SMF network element to establish the context corresponding to the sensing service.

The information for requesting the SMF network element to establish the context corresponding to the sensing service includes first information and eighth information. The first information indicates a requirement for the sensing service requested to be established, and the eighth information indicates an address of a next-hop node to which a UPF network element sends the sensing data.

S703: The SMF network element determines configuration information and sixth information and/or seventh information.

The configuration information is for configuring a rule used by the UPF network element to transmit the sensing data; the sixth information indicates an address of a next-hop node to which the access network device sends the sensing data; and the seventh information indicates an identity of a third tunnel, and the third tunnel is configured for the access network device to send the sensing data to the SF network element.

S704: The SMF network element sends the first information to a PCF network element. Correspondingly, the PCF network element receives the first information from the SMF network element.

S705: The PCF network element determines third information based on the first information. The third information indicates a QoS requirement for transmitting the sensing data of the sensing service.

S706: The PCF network element sends the third information to the SMF network element. Correspondingly, the SMF network element receives the third information from the PCF network element.

S707: The SMF network element determines fourth information based on the third information. The fourth information indicates the QoS requirement for transmitting the sensing data corresponding to the sensing service.

For specific descriptions of the information transmission method in Example 5, further refer to related descriptions of the information transmission method 200. Details are not described again.

To implement the functions in the methods provided in embodiments of this application, a network element/device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

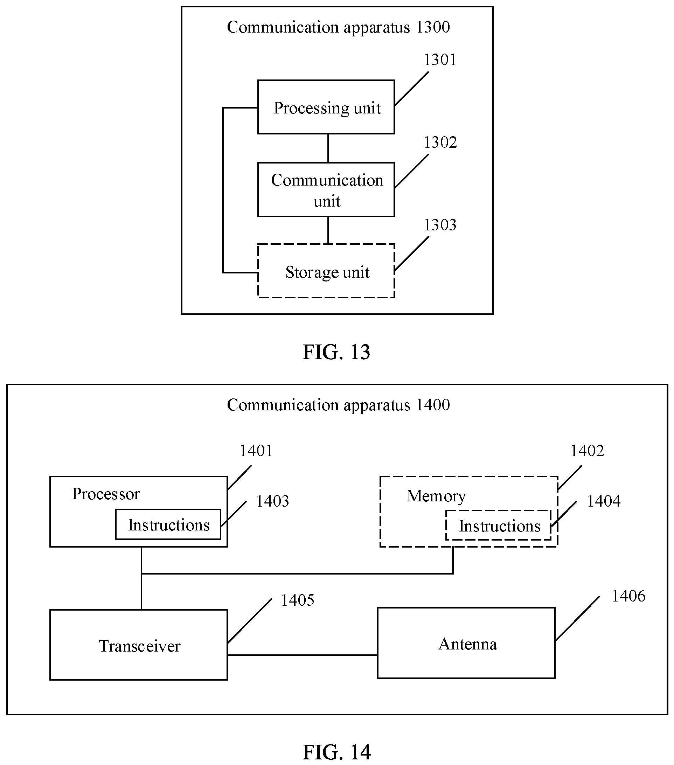

As shown in FIG. 13, an embodiment of this application provides a communication apparatus 1300. The communication apparatus 1300 may be an SF network element or an SMF network element, or may be a component (such as an integrated circuit or a chip) of an SF network element, or may be a component (such as an integrated circuit or a chip) of an SMF network element. The communication apparatus 1300 may alternatively be another communication unit, configured to implement the method in the method embodiments of this application. The communication apparatus 1300 may include a processing unit 1301. Optionally, the communication apparatus 1300 may further include a communication unit 1302. The processing unit 1301 is configured to control the communication unit 1302 to perform data/signaling sending and receiving. The communication unit 1302 may also be referred to as a transceiver unit. Optionally, the communication unit 1302 may include a sending unit and a receiving unit. The sending unit may be configured to send data/signaling, and the receiving unit may be configured to receive data/signaling. Optionally, the communication apparatus 1300 may further include a storage unit 1303. The storage unit 1303 may be configured to store information and/or data and/or instructions. The storage unit 1303 may interact with the processing unit 1301, or may interact with the communication unit 1302.

In a possible design, for a case in which the communication apparatus 1300 is configured to implement functions of the SF network element in the foregoing method embodiments:

The processing unit 1301 is configured to obtain first information, where the first information indicates a requirement for a sensing service requested to be established.

The communication unit 1302 is configured to send second information and third information to an access network device, where the second information and the third information are determined based on the first information, the second information indicates a QoS requirement for the sensing service, and the third information indicates a QoS requirement for transmitting sensing data corresponding to the sensing service.

In an optional implementation, the communication unit 1302 is further configured to send the first information or fourth information to an SMF network element, where the first information or the fourth information is for determining the third information. The fourth information is determined based on the first information, the fourth information indicates a QoS requirement corresponding to a first tunnel, and the first tunnel is configured for the access network device to send the sensing data to the SF network element through a UPF network element. The communication unit 1302 is further configured to receive the third information from the SMF network element, where the third information specifically indicates a QoS requirement corresponding to a second tunnel, and the second tunnel is configured for the access network device to send the sensing data to the UPF network element.

In an optional implementation, the second information includes one or more of the following: positioning accuracy information corresponding to sensing and collection, speed measurement accuracy information, sensing resolution information, a refresh rate of the sensing service, a miss detection rate, a false alarm rate, a transmission period of the sensing data, or transmission time of the sensing data.

In an optional implementation, the third information includes one or more of the following: a QoS identifier corresponding to the sensing data, an allocation and retention priority, a guaranteed bit rate, or a maximum bit rate.

In an optional implementation, the communication unit 1302 is further configured to send fifth information to the access network device, where the fifth information indicates a transmission mode of the sensing data, and the fifth information is determined based on the first information; and the transmission mode of the sensing data includes sending the sensing data via a control plane or a user plane.

In an optional implementation, the processing unit 1301 is further configured to obtain one or more of the following: first sensing area information, address information of an AF network element, or start time of the sensing service.

In an optional implementation, the communication unit 1302 is further configured to send, to the access network device, one or more of the following: second sensing area information, sixth information, seventh information, or the start time of the sensing service. The sixth information indicates an address of a next-hop node to which the access network device sends the sensing data. The seventh information indicates an identity of a third tunnel, and the third tunnel is configured for the access network device to send the sensing data to the SF network element.

In an optional implementation, the communication unit 1302 is further configured to receive the sixth information and/or the seventh information from the SMF network element.

In an optional implementation, the communication unit 1302 is further configured to send eighth information to the SMF network element, where the eighth information indicates an address of a next-hop node to which the UPF network element sends the sensing data.

In an optional implementation, the communication unit 1302 is further configured to receive ninth information and/or tenth information from the access network device. The ninth information indicates a QoS requirement accepted by the access network device in the QoS requirement for the sensing service. The tenth information indicates a QoS requirement accepted by the access network device in the QoS requirement for transmitting the sensing data corresponding to the sensing service.

In an optional implementation, the communication unit 1302 is further configured to send the tenth information to the SMF network element.

In another possible design, for a case in which the communication apparatus 1300 is configured to implement functions of the SF network element in the foregoing method embodiments:

The processing unit 1301 is configured to obtain first information, where the first information indicates a requirement for a sensing service requested to be established.

The communication unit 1302 is configured to send second information and identification information to an access network device, where the second information is determined based on the first information, the second information indicates a QoS requirement for the sensing service, and the identification information is for identifying the sensing service.

The communication unit 1302 is further configured to send the identification information and the first information or third information to an SMF network element, where the first information is for determining the third information, and the third information indicates a QoS requirement for transmitting sensing data corresponding to the sensing service.

In an optional implementation, the third information specifically indicates a QoS requirement corresponding to a first tunnel, and the first tunnel is configured for the access network device to send the sensing data to the SF network element through a UPF network element. The third information is for determining fourth information, the fourth information specifically indicates a QoS requirement corresponding to a second tunnel, and the second tunnel is configured for the access network device to send the sensing data to the UPF network element.

In an optional implementation, the second information includes one or more of the following: positioning accuracy information corresponding to sensing and collection, speed measurement accuracy information, sensing resolution information, a refresh rate of the sensing service, a miss detection rate, a false alarm rate, a transmission period of the sensing data, or transmission time of the sensing data.

In an optional implementation, the third information includes one or more of the following: a QoS identifier corresponding to the sensing data, an allocation and retention priority, a guaranteed bit rate, or a maximum bit rate.

In an optional implementation, the communication unit 1302 is further configured to send fifth information to the access network device, where the fifth information indicates a transmission mode of the sensing data, and the fifth information is determined based on the first information; and the transmission mode of the sensing data includes sending the sensing data via a control plane or a user plane.

In an optional implementation, the processing unit 1301 is further configured to obtain one or more of the following: first sensing area information, address information of an AF network element, or start time of the sensing service.

In an optional implementation, the communication unit 1302 is further configured to send, to the access network device, one or more of the following: second sensing area information or the start time of the sensing service.

In an optional implementation, the communication unit 1302 is further configured to send eighth information to the SMF network element, where the eighth information includes an address of a next-hop node to which the UPF network element sends the sensing data.

In an optional implementation, the communication unit 1302 is further configured to receive ninth information and/or tenth information from the access network device. The ninth information indicates a QoS requirement accepted by the access network device in the QoS requirement for the sensing service. The tenth information indicates a QoS requirement accepted by the access network device in the QoS requirement for transmitting the sensing data corresponding to the sensing service.

In an optional implementation, the communication unit 1302 is further configured to send the tenth information to the SMF network element.

In another possible design, for a case in which the communication apparatus 1300 is configured to implement functions of the SMF network element in the foregoing method embodiments:

The communication unit 1302 is configured to receive first information or fourth information from an SF network element. The first information is for determining the fourth information, and the first information indicates a requirement for a sensing service requested to be established; and the fourth information indicates a QoS requirement for transmitting sensing data corresponding to the sensing service.

The communication unit 1302 is further configured to send third information to the SF network element, where the third information is determined based on the fourth information, and the third information indicates the QoS requirement for transmitting the sensing data of the sensing service.

In an optional implementation, the communication unit 1302 is further configured to send the first information to a PCF network element, where the first information is for determining the fourth information. The SMF network element receives the fourth information from the PCF network element.

In an optional implementation, the fourth information specifically indicates a QoS requirement corresponding to a first tunnel, and the first tunnel is configured for the access network device to send the sensing data to the SF network element through a UPF network element. The third information specifically indicates a QoS requirement corresponding to a second tunnel, and the second tunnel is configured for the access network device to send the sensing data to the UPF network element.

In an optional implementation, the third information includes one or more of the following: a QoS identifier corresponding to the sensing data, an allocation and retention priority, a guaranteed bit rate, or a maximum bit rate.

In an optional implementation, the communication unit 1302 is further configured to send configuration information to the UPF network element, where the configuration information is for configuring a rule used by the UPF network element to transmit the sensing data, and the configuration information is determined based on the fourth information. The configuration information includes one or more of the following: a packet detection rule, a forwarding action rule, or a QoS enforcement rule.

In an optional implementation, the communication unit 1302 is further configured to send sixth information and/or seventh information to the SF network element. The sixth information indicates an address of a next-hop node to which the access network device sends the sensing data; and the seventh information indicates an identity of a third tunnel, and the third tunnel is configured for the access network device to send the sensing data to the SF network element.

In an optional implementation, the communication unit 1302 is further configured to receive tenth information from the SF network element, where the tenth information indicates a QoS requirement accepted by the access network device in the QoS requirement for transmitting the sensing data corresponding to the sensing service. The communication unit 1302 is further configured to send the tenth information to the UPF network element.

In another possible design, for a case in which the communication apparatus 1300 is configured to implement functions of the SMF network element in the foregoing method embodiments:

The communication unit 1302 is configured to receive identification information and first information or third information from an SF network element. The first information is for determining the third information, the first information indicates a requirement for a sensing service requested to be established, and the identification information is for identifying the sensing service; and the third information indicates a QoS requirement for transmitting sensing data corresponding to the sensing service.

The communication unit 1302 is further configured to send the identification information and fourth information to an access network device, where the identification information is for associating second information with the fourth information, the second information indicates a QoS requirement for the sensing service, the fourth information is determined based on the third information, and the fourth information indicates the QoS requirement for transmitting the sensing data corresponding to the sensing service.

In an optional implementation, the communication unit 1302 is further configured to send the first information to a PCF network element, where the first information is for determining the third information. The SMF network element receives the third information from the PCF network element.

In an optional implementation, the third information indicates a QoS requirement corresponding to a first tunnel, and the first tunnel is configured for the access network device to send the sensing data to the SF network element through a UPF network element. The fourth information specifically indicates a QoS requirement corresponding to a second tunnel, and the second tunnel is configured for the access network device to send the sensing data to the UPF network element.

In an optional implementation, the third information includes one or more of the following: a QoS identifier corresponding to the sensing data, an allocation and retention priority, a guaranteed bit rate, or a maximum bit rate.

In an optional implementation, the communication unit 1302 is further configured to send configuration information to the UPF network element, where the configuration information is for configuring a rule used by the UPF network element to transmit the sensing data, and the configuration information is determined based on the third information. The configuration information includes one or more of the following: a packet detection rule, a forwarding action rule, or a QoS enforcement rule.

In an optional implementation, the communication unit 1302 is further configured to send sixth information and/or seventh information to the access network device. The sixth information indicates an address of a next-hop node to which the access network device sends the sensing data; and the seventh information indicates an identity of a third tunnel, and the third tunnel is configured for the access network device to send the sensing data to the SF network element.

In an optional implementation, the communication unit 1302 is further configured to receive tenth information from the SF network element, where the tenth information indicates a QoS requirement accepted by the access network device in the QoS requirement for transmitting the sensing data corresponding to the sensing service. The communication unit 1302 is further configured to send the tenth information to the UPF network element.

This embodiment of this application and the foregoing method embodiments are based on a same concept and achieve same technical effects. For a specific principle, refer to the descriptions of the foregoing embodiments. Details are not described again.

An embodiment of this application further provides a communication apparatus 1400, as shown in FIG. 14. The communication apparatus 1400 may be an SF network element or an SMF network element, or may be a chip, a chip system, a processor, or the like that supports an SF network element or an SMF network element in implementing the foregoing methods. The apparatus may be configured to implement the method described in the foregoing method embodiments. For details, refer to the descriptions in the foregoing method embodiments.

The communication apparatus 1400 may include one or more processors 1401. The processor 1401 may be configured to implement some or all functions of the SF network element or the SMF network element by using a logic circuit or by running a computer program. The processor 1401 may be a general-purpose processor, a dedicated processor, or the like, for example, may be a baseband processor, a digital signal processor, an application-specific integrated circuit, a field programmable gate array or another programmable logic device, a discrete gate or a transistor logic device, or a discrete hardware component or a CPU. The baseband processor may be configured to process a communication protocol and communication data. A central processing unit may be configured to control the communication apparatus, execute a software program, and process data of the software program. The communication apparatus is, for example, a base station, a baseband chip, a terminal, a terminal chip, a distributed unit (distributed unit, DU), or a central unit (central unit, CU).

Optionally, the communication apparatus 1400 may include one or more memories 1402, storing instructions 1404. The instructions may be run on the processor 1401, so that the communication apparatus 1400 performs the method described in the foregoing method embodiments. Optionally, the memory 1402 may further store data. The processor 1401 and the memory 1402 may be separately disposed or may be integrated together.

The memory 1402 may include but is not limited to a non-volatile memory such as a hard disk drive (hard disk drive, HDD) or a solid-state drive (solid-state drive, SSD), a random access memory (random access memory, RAM), an erasable programmable read-only memory (erasable programmable ROM, EPROM), a ROM or a compact disc read-only memory (compact disc read-only memory, CD-ROM), or the like.

Optionally, the communication apparatus 1400 may further include a transceiver 1405 and an antenna 1406. The transceiver 1405 may be referred to as a transceiver unit, a transceiver machine, a transceiver circuit, or the like, and is configured to implement a transceiver function. The transceiver 1405 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, for a case in which the communication apparatus 1400 is configured to implement functions of the SF network element in the foregoing method embodiments:

The processor 1401 is configured to obtain first information, where the first information indicates a requirement for a sensing service requested to be established.

The transceiver 1405 is configured to send second information and third information to an access network device, where the second information and the third information are determined based on the first information, the second information indicates a QoS requirement for the sensing service, and the third information indicates a QoS requirement for transmitting sensing data corresponding to the sensing service.

In another possible design, for a case in which the communication apparatus 1400 is configured to implement functions of the SF network element in the foregoing method embodiments:

The processor 1401 is configured to obtain first information, where the first information indicates a requirement for a sensing service requested to be established.

The transceiver 1405 is configured to send second information and identification information to an access network device, where the second information is determined based on the first information, the second information indicates a QoS requirement for the sensing service, and the identification information is for identifying the sensing service.

The transceiver 1405 is further configured to send the identification information and the first information or third information to an SMF network element, where the first information is for determining the third information, and the third information indicates a QoS requirement for transmitting sensing data corresponding to the sensing service.

In another possible design, for a case in which the communication apparatus 1400 is configured to implement functions of the SMF network element in the foregoing method embodiments:

The transceiver 1405 is configured to receive first information or fourth information from an SF network element. The first information is for determining the fourth information, and the first information indicates a requirement for a sensing service requested to be established; and the fourth information indicates a QoS requirement for transmitting sensing data corresponding to the sensing service.

The transceiver 1405 is further configured to send third information to the SF network element, where the third information is determined based on the fourth information, and the third information indicates the QoS requirement for transmitting the sensing data of the sensing service.

In another possible design, for a case in which the communication apparatus 1400 is configured to implement functions of the SMF network element in the foregoing method embodiments:

The transceiver 1405 is configured to receive identification information and first information or third information from an SF network element. The first information is for determining the third information, the first information indicates a requirement for a sensing service requested to be established, and the identification information is for identifying the sensing service; and the third information indicates a QoS requirement for transmitting sensing data corresponding to the sensing service.

The transceiver 1405 is further configured to send the identification information and fourth information to an access network device, where the identification information is for associating second information with the fourth information, the second information indicates a QoS requirement for the sensing service, the fourth information is determined based on the third information, and the fourth information indicates the QoS requirement for transmitting the sensing data corresponding to the sensing service.

In another possible design, the processor 1401 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1401 may store instructions 1403. When the instructions 1403 are run on the processor 1401, the communication apparatus 1400 may be enabled to perform the method described in the foregoing method embodiments. The instructions 1403 may be built into the processor 1401. In this case, the processor 1401 may be implemented by hardware.

In still another possible design, the communication apparatus 1400 may include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, such as a complementary metal oxide semiconductor (complementary metal oxide semiconductor, CMOS), an nMetal-oxide-semiconductor (nMetal-oxide-semiconductor, NMOS), a positive channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A person skilled in the art may further understand that various illustrative logical blocks (illustrative logic block) and steps (step) that are listed in embodiments of this application may be implemented by electronic hardware, computer software, or a combination thereof. Whether the functions are implemented by hardware or software depends on particular applications and design requirements of an entire system. A person skilled in the art may use various methods to implement the functions for particular applications, but it should not be considered that the implementation goes beyond the protection scope of embodiments of this application.

This embodiment of this application and the foregoing method embodiments are based on a same concept and achieve same technical effects. For a specific principle, refer to the descriptions of the foregoing method embodiments. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a chip, and the chip includes a processor. The processor is configured to execute code or instructions, to implement a function in any one of the foregoing method embodiments. Optionally, the chip further includes an interface. The processor is coupled to the interface, and the interface is configured to receive or output a signal.

All or some of the foregoing embodiments may be implemented by software, hardware, firmware, or any combination thereof. When implemented by using software, all or some of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (such as a floppy disk, a hard disk drive, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method comprises:
obtaining first information, wherein the first information indicates a requirement for a sensing service requested to be established; and
sending second information and third information to an access network device, wherein the second information and the third information are determined based on the first information, the second information indicates a quality of service QoS requirement for the sensing service, and the third information indicates a QoS requirement for transmitting sensing data corresponding to the sensing service.

2. The method according to claim 1, wherein the method further comprises:
sending the first information or fourth information to a session management function SMF network element, wherein the first information or the fourth information is for determining the third information;
the fourth information is determined based on the first information, the fourth information indicates a QoS requirement corresponding to a first tunnel, and the first tunnel is configured for the access network device to send the sensing data to a sensing function SF network element through a user plane function UPF network element; and
receiving the third information from the SMF network element, wherein the third information specifically indicates a QoS requirement corresponding to a second tunnel, and the second tunnel is configured for the access network device to send the sensing data to the UPF network element.

3. The method according to claim 1 or 2, wherein
the second information comprises one or more of the following: positioning accuracy information corresponding to sensing and collection, speed measurement accuracy information, sensing resolution information, a refresh rate of the sensing service, a miss detection rate, a false alarm rate, a transmission period of the sensing data, or transmission time of the sensing data.

4. The method according to any one of claims 1 to 3, wherein
the third information comprises one or more of the following: a QoS identifier corresponding to the sensing data, an allocation and retention priority, a guaranteed bit rate, or a maximum bit rate.

5. The method according to any one of claims 1 to 4, wherein the method further comprises:
sending fifth information to the access network device, wherein the fifth information indicates a transmission mode of the sensing data, and the fifth information is determined based on the first information; and
the transmission mode of the sensing data comprises sending the sensing data via a control plane or a user plane.

6. The method according to any one of claims 1 to 5, wherein the method further comprises:
obtaining one or more of the following: first sensing area information, address information of an application function AF network element, or start time of the sensing service.

7. The method according to any one of claims 1 to 6, wherein the method further comprises:
sending, to the access network device, one or more of the following: second sensing area information, sixth information, seventh information, or the start time of the sensing service, wherein
the sixth information indicates an address of a next-hop node to which the access network device sends the sensing data; and
the seventh information indicates an identity of a third tunnel, and the third tunnel is configured for the access network device to send the sensing data to the SF network element.

8. The method according to claim 7, wherein the method further comprises:
receiving the sixth information and/or the seventh information from the SMF network element.

9. The method according to any one of claims 1 to 8, wherein the method further comprises:
sending eighth information to the SMF network element, wherein the eighth information indicates an address of a next-hop node to which the UPF network element sends the sensing data.

10. The method according to any one of claims 1 to 9, wherein the method further comprises:
receiving ninth information and/or tenth information from the access network device, wherein
the ninth information indicates a QoS requirement accepted by the access network device in the QoS requirement for the sensing service; and
the tenth information indicates a QoS requirement accepted by the access network device in the QoS requirement for transmitting the sensing data corresponding to the sensing service.

11. The method according to claim 10, wherein the method further comprises:
sending the tenth information to the SMF network element.

12. An information transmission method, wherein the method comprises:
obtaining first information, wherein the first information indicates a requirement for a sensing service requested to be established;
sending second information and identification information to an access network device, wherein the second information is determined based on the first information, the second information indicates a quality of service QoS requirement for the sensing service, and the identification information is for identifying the sensing service; and
sending the identification information and the first information or third information to a session management function SMF network element, wherein the first information is for determining the third information, and the third information indicates a QoS requirement for transmitting sensing data corresponding to the sensing service.

13. The method according to claim 12, wherein
the third information specifically indicates a QoS requirement corresponding to a first tunnel, and the first tunnel is configured for the access network device to send the sensing data to a sensing function SF network element through a user plane function UPF network element; and the third information is for determining fourth information, the fourth information specifically indicates a QoS requirement corresponding to a second tunnel, and the second tunnel is configured for the access network device to send the sensing data to the UPF network element.

14. The method according to claim 12 or 13, wherein
the second information comprises one or more of the following: positioning accuracy information corresponding to the sensing and collection, speed measurement accuracy information, sensing resolution information, a refresh rate of the sensing service, a miss detection rate, a false alarm rate, a transmission period of the sensing data, or transmission time of the sensing data.

15. The method according to any one of claims 12 to 14, wherein
the third information comprises one or more of the following: a QoS identifier corresponding to the sensing data, an allocation and retention priority, a guaranteed bit rate, or a maximum bit rate.

16. The method according to any one of claims 12 to 15, wherein the method further comprises:
sending fifth information to the access network device, wherein the fifth information indicates a transmission mode of the sensing data, and the fifth information is determined based on the first information; and
the transmission mode of the sensing data comprises sending the sensing data via a control plane or a user plane.

17. The method according to any one of claims 12 to 16, wherein the method further comprises:
obtaining one or more of the following: first sensing area information, address information of an application function AF network element, or start time of the sensing service.

18. The method according to any one of claims 12 to 17, wherein the method further comprises:
sending, to the access network device, one or more of the following: second sensing area information or the start time of the sensing service.

19. The method according to any one of claims 12 to 18, wherein the method further comprises:
sending eighth information to the SMF network element, wherein the eighth information comprises an address of a next-hop node to which the UPF network element sends the sensing data.

20. The method according to any one of claims 12 to 19, wherein the method further comprises:
receiving ninth information and/or tenth information from the access network device, wherein
the ninth information indicates a QoS requirement accepted by the access network device in the QoS requirement for the sensing service; and
the tenth information indicates a QoS requirement accepted by the access network device in the QoS requirement for transmitting the sensing data corresponding to the sensing service.

21. The method according to claim 20, wherein the method further comprises:
sending the tenth information to the SMF network element.

22. An information transmission method, wherein the method comprises:
receiving first information or fourth information from a sensing function SF network element, wherein
the first information is for determining the fourth information, and the first information indicates a requirement for a sensing service requested to be established; and the fourth information indicates a quality of service QoS requirement for transmitting sensing data corresponding to the sensing service; and
sending third information to the SF network element, wherein the third information is determined based on the fourth information, and the third information indicates the QoS requirement for transmitting the sensing data of the sensing service.

23. The method according to claim 22, wherein the method further comprises:
sending the first information to a policy control function PCF network element, wherein the first information is for determining the fourth information; and
receiving the fourth information from the PCF network element.

24. The method according to claim 22 or 23, wherein
the fourth information specifically indicates a QoS requirement corresponding to a first tunnel, and the first tunnel is configured for an access network device to send the sensing data to the SF network element through a user plane function UPF network element; and
the third information specifically indicates a QoS requirement corresponding to a second tunnel, and the second tunnel is configured for the access network device to send the sensing data to the UPF network element.

25. The method according to any one of claims 22 to 24, wherein
the third information comprises one or more of the following: a QoS identifier corresponding to the sensing data, an allocation and retention priority, a guaranteed bit rate, or a maximum bit rate.

26. The method according to any one of claims 22 to 25, wherein the method further comprises:
sending configuration information to the UPF network element, wherein the configuration information is for configuring a rule used by the UPF network element to transmit the sensing data, and the configuration information is determined based on the fourth information; and
the configuration information comprises one or more of the following: a packet detection rule, a forwarding action rule, or a QoS enforcement rule.

27. The method according to any one of claims 22 to 26, wherein the method further comprises:
sending sixth information and/or seventh information to the SF network element, wherein
the sixth information indicates an address of a next-hop node to which the access network device sends the sensing data; and
the seventh information indicates an identity of a third tunnel, and the third tunnel is configured for the access network device to send the sensing data to the SF network element.

28. The method according to any one of claims 22 to 27, wherein the method further comprises:
receiving tenth information from the SF network element, wherein the tenth information indicates a QoS requirement accepted by the access network device in the QoS requirement for transmitting the sensing data corresponding to the sensing service; and
sending the tenth information to the UPF network element.

29. An information transmission method, wherein the method comprises:
receiving identification information and first information or third information from a sensing function SF network element, wherein
the first information is for determining the third information, the first information indicates a requirement for a sensing service requested to be established, and the identification information is for identifying the sensing service; and the third information indicates a quality of service QoS requirement for transmitting sensing data corresponding to the sensing service; and
sending the identification information and fourth information to an access network device, wherein the identification information is for associating second information with the fourth information, the second information indicates a QoS requirement for the sensing service, the fourth information is determined based on the third information, and the fourth information indicates the QoS requirement for transmitting the sensing data corresponding to the sensing service.

30. The method according to claim 29, wherein the method further comprises:
sending the first information to a policy control function PCF network element, wherein the first information is for determining the third information; and
receiving the third information from the PCF network element.

31. The method according to claim 29 or 30, wherein
the third information indicates a QoS requirement corresponding to a first tunnel, and the first tunnel is configured for the access network device to send the sensing data to the SF network element through a user plane function UPF network element; and
the fourth information specifically indicates a QoS requirement corresponding to a second tunnel, and the second tunnel is configured for the access network device to send the sensing data to the UPF network element.

32. The method according to any one of claims 29 to 31, wherein
the third information comprises one or more of the following: a QoS identifier corresponding to the sensing data, an allocation and retention priority, a guaranteed bit rate, or a maximum bit rate.

33. The method according to any one of claims 29 to 32, wherein the method further comprises:
sending configuration information to the UPF network element, wherein the configuration information is for configuring a rule used by the UPF network element to transmit the sensing data, and the configuration information is determined based on the third information; and
the configuration information comprises one or more of the following: a packet detection rule, a forwarding action rule, or a QoS enforcement rule.

34. The method according to any one of claims 29 to 33, wherein the method further comprises:
sending sixth information and/or seventh information to the access network device, wherein
the sixth information indicates an address of a next-hop node to which the access network device sends the sensing data; and
the seventh information indicates an identity of a third tunnel, and the third tunnel is configured for the access network device to send the sensing data to the SF network element.

35. The method according to any one of claims 29 to 34, wherein the method further comprises:
receiving tenth information from the SF network element, wherein the tenth information indicates a QoS requirement accepted by the access network device in the QoS requirement for transmitting the sensing data corresponding to the sensing service; and
sending the tenth information to the UPF network element.

36. A communication system, comprising an apparatus configured to perform the method according to any one of claims 1 to 11.

37. The system according to claim 36, wherein the system further comprises an apparatus configured to perform the method according to any one of claims 22 to 28.

38. A communication system, comprising an apparatus configured to perform the method according to any one of claims 12 to 21 and an apparatus configured to perform the method according to any one of claims 29 to 35.

39. A communication apparatus, wherein the apparatus comprises a module or unit configured to implement the method according to any one of claims 1 to 11, or comprises a module or unit configured to implement the method according to any one of claims 12 to 21, or comprises a module or unit configured to implement the method according to any one of claims 22 to 28, or comprises a module or unit configured to implement the method according to any one of claims 29 to 35.

40. A communication apparatus, comprising a processor, wherein
the processor is configured to execute a computer program or instructions, to enable the communication apparatus to perform the method according to any one of claims 1 to 11, or perform the method according to any one of claims 12 to 21, or perform the method according to any one of claims 22 to 28, or perform the method according to any one of claims 29 to 35.

41. A computer-readable storage medium, wherein the computer-readable storage medium stores a computer program, and when the computer program is run, the method according to any one of claims 1 to 11 is implemented, or the method according to any one of claims 12 to 21 is implemented, or the method according to any one of claims 22 to 28 is implemented, or the method according to any one of claims 29 to 35 is implemented.

42. A computer program product, wherein the computer program product comprises computer program code, and when the computer program code is run, the method according to any one of claims 1 to 11 is implemented, or the method according to any one of claims 12 to 21 is implemented, or the method according to any one of claims 22 to 28 is implemented, or the method according to any one of claims 29 to 35 is implemented.
